(19) Europäisches Patentamt
European Patent Office
Office européen des brevets

(11) **EP 4 202 640 A1**

(12) **EUROPEAN PATENT APPLICATION**

(43) Date of publication:
28.06.2023 Bulletin 2023/26

(21) Application number: 22206380.2

(22) Date of filing: 09.11.2022

(51) International Patent Classification (IPC):
*G06F 7/53* (2006.01)    *G06F 7/72* (2006.01)
*H04L 9/00* (2022.01)

(52) Cooperative Patent Classification (CPC):
**G06F 7/5324; G06F 7/722; H04L 9/008**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2021 US 202117560838**

(71) Applicant: **INTEL Corporation
Santa Clara, CA 95054 (US)**

(72) Inventors:
• **PASCA, Bogdan
31000 Toulouse (FR)**
• **LANGHAMMER, Martin
Alderbury, SP53AB (GB)**

(74) Representative: **Viering, Jentschura & Partner
mbB
Patent- und Rechtsanwälte
Am Brauhaus 8
01099 Dresden (DE)**

(54) **SYSTEMS AND METHODS FOR CALCULATING LARGE POLYNOMIAL MULTIPLICATIONS**

(57)    This disclosure is directed to multiplier circuitry that includes a multiplier that is configurable to generate a plurality of subproducts by performing a plurality of multiplication operations involving values having a first precision using a recursive multiplication process in which a second multiplier of the multiplier performs a second plurality of multiplication operations involving values having a second precision that are derived from the values having the first precision.

FIG. 12

EP 4 202 640 A1

**Description**

**BACKGROUND**

The present disclosure relates generally to data encryption, and more specifically to techniques for performing multiplication operations associated with homomorphic encryption.

When performing data encryption or utilizing encrypted data, computations may be performed on data. To perform computations on encrypted data, the encrypted data may be decrypted and re-encrypted once the computations on the decrypted data are completed. The same operations may also be performed directly on the encrypted data. This has the advantage that computations may be performed by an entity which does not have the capability or permission to decrypt the data. Each computation performed on encrypted data adds to a noise level. When the noise level increases beyond a certain threshold, the data may not be decrypted correctly anymore, making the data unusable. To avoid increasing the noise level of the encrypted data beyond the threshold, homomorphic encryption re-encrypts the noisy encrypted data. The noise level in the newly encrypted data is reduced, and thus a new set of computations may be performed. This process is called bootstrapping.

To avoid increasing the noise level of the encrypted data, homomorphic encryption may be used to perform computations on the encrypted data without decryption.

However, homomorphic encryption is computationally and resource intensive, where the core of which is large polynomial multiplications. Current implementations may include large Fast-Fourier Transforms, which are complex to implement in either hardware or software and are resource intensive. As such, it may be desirable to reduce the number of computations and resources utilized to calculate large polynomial multiplications.

**SUMMARY**

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In one embodiment, multiplier circuitry includes a multiplier that is configurable to generate a plurality of sub-products by performing a plurality of multiplication operations involving values having a first precision using a recursive multiplication process in which a second multiplier of the multiplier performs a second plurality of multiplication operations involving values having a second precision that are derived from the values having the first precision.

In another embodiment, an integrated circuit device includes multiplier circuitry that has a multiplier configurable to generate a plurality of subproducts by performing a plurality of multiplication operations involving values having a first precision using a recursive multiplication process in which a second multiplier of the multiplier performs a second plurality of multiplication operations involving values having a second precision that are derived from the values having the first precision.

In yet another embodiment, a system includes a first integrated circuit device that has multiplier circuitry. The multiplier circuitry includes a multiplier configurable to generate a plurality of subproducts by performing a plurality of multiplication operations involving values having a first precision using a recursive multiplication process in which a second multiplier of the multiplier performs a second plurality of multiplication operations involving values having a second precision that are derived from the values having the first precision. The system also includes a second integrated circuit device that is communicatively coupled to the first integrated circuit device.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

**BRIEF DESCRIPTION OF THE DRAWINGS**

The patent or application file contains at least one drawing executed in color. Copies of this patent or patent application publication with color drawing(s) will be provided by the Office upon request and payment of the necessary fee.

Various aspects of this disclosure may be better understood upon reading the following detailed description and upon reference to the drawings described below in which like numerals refer to like parts.

FIG. 1 is a block diagram of a system that may implement arithmetic operations, such as multiplication, using multiplier circuitry, according to an embodiment of the present disclosure;

FIG. 2 illustrates an example of the integrated circuit device as a programmable logic device, such as a field-programmable gate array (FPGA), according to an embodiment of the present disclosure;

FIG. 3 illustrates an example of homomorphic encryption, according to an embodiment of the present disclosure;

FIG. 4 illustrates a graph representation of an implementation for a 32-bit x 32-bit multiplication operation, according to an embodiment of the present disclosure;

FIG. 5 illustrates a mapping of operations to soft logic in associated with performing the multiplication operation of FIG. 4, according to an embodiment of the present disclosure;

FIG. 6 illustrates a graph of an alternative implementation of the multiplication operation of FIG. 4, according to an embodiment of the present disclosure;

FIG. 7 illustrates the dependencies between arithmetic operations for a first degree polynomial multiplication operation when the Karatsuba-Ofman (K-O) algorithm is applied, according to an embodiment of the present disclosure;

FIG. 8 illustrates the dependencies between arithmetic operations for a third degree polynomial multiplication operation when the K-O algorithm is applied, according to an embodiment of the present disclosure;

FIG. 9 illustrates an example of three first degree polynomial multiplications, according to an embodiment of the present disclosure;

FIG. 10 illustrates a block diagram of assembling a degree 127 polynomial from one or more degree 62 polynomials, according to an embodiment of the present disclosure;

FIG. 11 illustrates a block diagram of assembling a degree 127 polynomial from one or more degree 63 polynomials, according to an embodiment of the present disclosure;

FIG. 12 illustrates a block diagram with three implementations of the block diagram to implement the degree 255 polynomial multiplication, according to an embodiment of the present disclosure;

FIGS. 13A, 13B, and 13C each illustrate a portion of a block diagram of an implementation of a degree 511 polynomial multiplication operation, according to an embodiment of the present disclosure;

FIG. 14 illustrates a graph of a degree 3 polynomial multiplication and degree-1 polynomial reduction, according to an embodiment of the present disclosure;

FIG. 15 illustrates a functional unit allocation report, which may include one multiplier, two adders, and two subtractors according to an embodiment of the present disclosure;

FIG. 16 illustrates an example modulo schedule for a degree 3 polynomial multiplication, according to an embodiment of the present disclosure;

FIG. 17 illustrates an operational storage report, according to an embodiment of the present disclosure;

FIG. 18 illustrates an operational storage report for reading from one or more storage units, according to an embodiment of the present disclosure;

FIG. 19 illustrates a multiplexer mapping report for mapping the storage of resultants from operations into the first storage unit and the second storage unit, according to an embodiment of the present disclosure;

FIG. 20 illustrates an operational storage reports and the multiplexer mapping report translated into a graph, according to an embodiment of the present disclosure;

FIG. 21 illustrates a block diagram of a logic circuit based on the operational storage reports and the multiplexer mapping report, according to an embodiment of the present disclosure;

FIG. 22 illustrates a logic circuit including the polynomial multiplier, adders, and a set of multiplexers and storage units, according to an embodiment of the present disclosure;

FIG. 23 illustrates a block diagram of a logic circuit for polynomial multiplication, according to an embodiment of the present disclosure;

FIG. 24 illustrates an example schedule for scheduling reduction simultaneously with polynomial multiplication, according to an embodiment of the present disclosure;

FIG. 25 illustrates an enumerated schedule of FIG. 24, according to an embodiment of the present disclosure;

FIG. 26 illustrates a modulo dataflow for the schedule, according to an embodiment of the present disclosure;

FIG. 27 illustrates a schedule for a 1024 element polynomial, according to an embodiment of the present disclosure;

FIG. 28 illustrates an example processing pipeline for performing polynomial multiplication, according to an embodiment of the present disclosure;

FIG. 29 illustrates an addressing sequence having, according to an embodiment of the present disclosure;

FIG. 30 illustrates an example processing pipeline for performing polynomial multiplication in parallel, according to an embodiment of the present disclosure;

FIG. 31 illustrates an addressing sequence to decompose a 64 element polynomial into degree-7 polynomials, according to an embodiment of the present disclosure;

FIG. 32 shows an alignment of column ordering of one or more elements of the decomposition completed in FIG. 31, according to an embodiment of the present disclosure;

FIG. 33 illustrates the multiplication of two degree-1 polynomials results in a degree-2 polynomial, according to an embodiment of the present disclosure;

FIG. 34 illustrates an example of the multiplication of two degree-7 polynomials, according to an embodiment of the present disclosure;

FIG. 35 illustrates the storage of results from polynomial multiplication, according to an embodiment of the present disclosure;

FIG. 36 illustrates the storage of results from polynomial multiplication with segments with the high radix value, according to an embodiment of the present disclosure;

FIG. 37 illustrates the storage of both polynomials in a single memory unit, according to an embodiment of the present disclosure;

FIG. 38 is an alignment for adding the segments together, according to an embodiment of the present disclosure;

FIG. 39 illustrates a single memory expansion and multiplication circuit, according to an embodiment of the present disclosure;

FIG. 40 illustrates a dual memory expansion and multiplication circuit, according to an embodiment of the present disclosure;

FIG. 41 illustrates a dual memory expansion and multiplication with double memory summation circuit 72, according to an embodiment of the present disclosure; and

FIG. 42 illustrates a data processing system, in accordance with an embodiment of the present disclosure.

**DETAILED DESCRIPTION OF SPECIFIC EMBODIMENTS**

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. Furthermore, the particular features, structures, or characteristics may be combined in any suitable manner in one or more embodiments. Use of the term "approximately," "near," "about", and/or "substantially" should be understood to mean including close to a target (e.g., design, value, amount), such as within a margin of any suitable or contemplatable error (e.g., within 0.1% of a target, within 1% of a target, within 5% of a target, within 10% of a target, within 25% of a target, and so on).

As discussed above, homomorphic encryption may allow for computations (e.g., operations) to be applied to encrypted data without decrypting the encrypted data. Thus, if the same operations were performed on unencrypted data and encrypted data (generated from encrypting the unencrypted data), and the resulting encrypted data were to be decrypted, the decrypted data would be equivalent the unencrypted data generated as a result of performing the operations. The most compute intensive part of homomorphic encryption may be the multiplication of large polynomials (e.g., polynomials with 2048 coefficients). This may be further complicated by the calculating of the modulus (e.g., integers, coefficients) of the polynomial. The calculating of the modulus of the polynomial may be scheduled in such a way to maximize usage of architecture executing the homomorphic encryption. Additionally, the architecture executing the homomorphic encryption may be designed to produce results more effectively (e.g., higher data throughput, lower latency, and reduced power consumption) compared to current implementations. Thus, the presently disclosed embodiments enable an architecture to efficiently perform large polynomial multiplications which may be used for a variety of applications such as, but not limited to, homomorphic encryption.

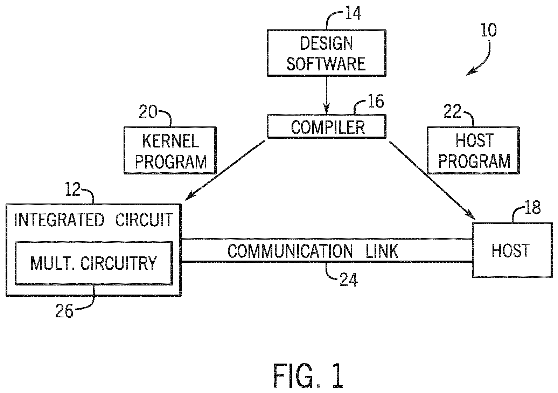

With the foregoing in mind, FIG. 1 is a block diagram of a system 10 that may implement arithmetic operations, such as multiplication, using multiplier circuitry. A designer may desire to implement functionality, such as the large precision arithmetic operations of this disclosure, on an integrated circuit device 12 (such as a field-programmable gate array (FPGA) or an application-specific integrated circuit (ASIC)). In some cases, the designer may specify a high-level program to be implemented, such as an OpenCL program, which may enable the designer to more efficiently and easily provide programming instructions to configure a set of programmable logic cells for the integrated circuit device 12 without specific knowledge of low-level hardware description languages (e.g., Verilog or VHDL). For example, because OpenCL is quite similar to other high-level programming languages, such as C++, designers of programmable logic familiar with such programming languages may have a reduced learning curve than designers that are required to learn unfamiliar low-level hardware description languages to implement new functionalities in the integrated circuit device 12.

Designers may implement their high-level designs using design software 14, such as a version of Intel® Quartus® by INTEL CORPORATION. The design software 14 may use a compiler 16 to convert the high-level program into a lower-level description. The compiler 16 may provide machine-readable instructions representative of the high-level program to a host 18 and the integrated circuit device 12. The host 18 may receive a host program 22 which may be implemented by the kernel programs 20. To implement the host program 22, the host 18 may communicate instructions from the host program 22 to the integrated circuit device 12 via a communications link 24, which may be, for example, direct memory access (DMA) communications or peripheral component interconnect express (PCIe) communications. In some embodiments, the kernel programs 20 and the host 18 may enable configuration of multiplier circuitry 26 on the integrated circuit device 12. The multiplier circuitry 26 may include circuitry that is utilized to perform several different operations. For example, as discussed below, the multiplier circuitry 26 may include one or more multipliers and adders that are respectively utilized to perform multiplication and addition operations. Accordingly, the multiplier circuitry 26 may include circuitry to implement, for example, operations to perform multiplication that may be used for various applications, such as encryption, decryption, and blockchain applications. As additionally, discussed below, the multiplier circuitry 26 may include DSP blocks (e.g., DSP blocks out of many (e.g., hundreds or thousands) DSP blocks included in the integrated circuit device 12) or be included in one or more DSP blocks included in the integrated circuit device 12. Furthermore, adder circuitry may be included in the multiplier circuitry 26, for example, to add subproducts that are determined when performing multiplication operations.

While the discussion above describes the application of a high-level program, in some embodiments, the designer may use the design software 14 to generate and/or to specify a low-level program, such as the low-level hardware description languages described above. Further, in some embodiments, the system 10 may be implemented without a separate host program 22. Furthermore, in other embodiments, the multiplier circuitry 26 may be partially implemented in portions of the integrated circuitry device 12 that are programmable by the end user (e.g., soft logic) and in parts of the integrated circuit device 12 that are not programmable by the end user (e.g., hard logic). For example, DSP blocks may be implemented in hard logic, while other circuitry included in the multiplier circuitry 26, including the circuitry utilized for routing data between portions of the multiplier circuitry 26, may be implemented in soft logic. Thus, embodiments described herein are intended to be illustrative and not limiting.

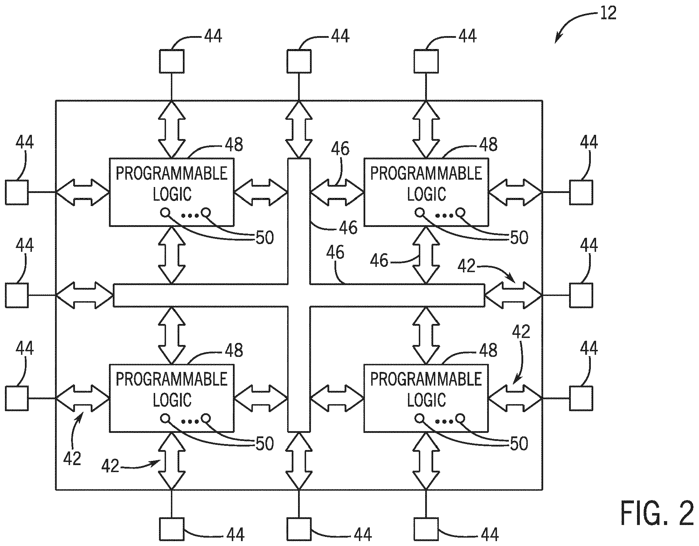

Turning now to a more detailed discussion of the integrated circuit device 12, FIG. 2 illustrates an example of the integrated circuit device 12 as a programmable logic device, such as a field-programmable gate array (FPGA). Further, it should be understood that the integrated circuit device 12 may be any other suitable type of integrated circuit device (e.g., an application-specific integrated circuit and/or application-specific standard product). As shown, the integrated circuit device 12 may have input/output circuitry 42 for driving signals off device and for receiving signals from other devices via input/output pins 44. Interconnection resources 46, such as global and local vertical and horizontal conductive lines and buses, may be used to route signals on integrated circuit device 12. Additionally, interconnection resources 46 may include fixed interconnects (conductive lines) and programmable interconnects (e.g., programmable connections between respective fixed interconnects). Programmable logic 48 may include combinational and sequential logic circuitry. For example, programmable logic 48 may include look-up tables, registers, and multiplexers. In various embodiments, the programmable logic 48 may be configured to perform a custom logic function. The programmable interconnects associated with interconnection resources may be considered to be a part of the programmable logic 48.

Programmable logic devices, which the integrated circuit device 12 may represent, may contain programmable elements 50 within the programmable logic 48. For example, as discussed above, a designer (e.g., a customer) may program (e.g., configure) the programmable logic 48 to perform one or more desired functions. By way of example, some programmable logic devices may be programmed by configuring their programmable elements 50 using mask programming arrangements, which is performed during semiconductor manufacturing. Other programmable logic devices are configured after semiconductor fabrication operations have been completed, such as by using electrical programming or laser programming to program their programmable elements 50. In general, programmable elements 50 may be based on any suitable programmable technology, such as fuses, antifuses, electrically-programmable read-only-memory technology, random-access memory cells, mask-programmed elements, and so forth.

Many programmable logic devices are electrically programmed. With electrical programming arrangements, the programmable elements 50 may be formed from one or more memory cells. For example, during programming, configuration data is loaded into the memory cells using pins 44 and input/output circuitry 42. In one embodiment, the memory cells may be implemented as random-access-memory (RAM) cells. The use of memory cells based on RAM technology is described herein is intended to be only one example. Further, because these RAM cells are loaded with configuration data during programming, they are sometimes referred to as configuration RAM cells (CRAM). These memory cells may each provide a corresponding static control output signal that controls the state of an associated logic component in programmable logic 48. For instance, in some embodiments, the output signals may be applied to the gates of metal-oxide-semiconductor (MOS) transistors within the programmable logic 48.

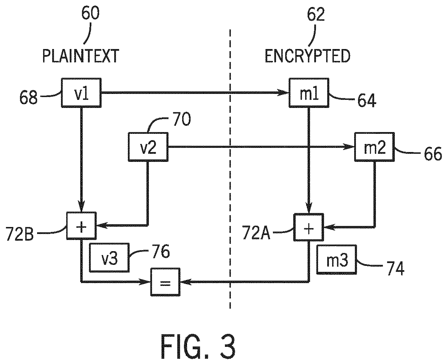

Homomorphic encryption may be used to perform computations on encrypted data without decrypting it. With the foregoing in mind, FIG. 3 illustrates an example of homomorphic encryption in which there is a plaintext domain 60 and a corresponding encrypted domain 62. In the encrypted domain 62, a first encrypted value 64 and a second encrypted value 66 respectively correspond to a first unencrypted value 68 and a second unencrypted value 70 in the plaintext domain 60.

Furthermore, homomorphic encryption may allow for arithmetic operations with the first unencrypted value 68 and the second unencrypted value 70 by manipulating the corresponding encrypted values 64, 66. In FIG. 3, a homomorphic addition operation 72A may correspond to a plaintext addition operation 72B. That is, in the homomorphic addition operation 72A the first encrypted value 64 and the second encrypted value 66 may be added to produce an encrypted sum 74. The encrypted sum 74 may be equal to an unencrypted sum 76 (when decrypted), and the unencrypted sum 76 is the result of adding the first unencrypted value 68 and the second unencrypted value 70. As discussed above, homomorphic encryption may be used on any type of sensitive data being manipulated and additionally when some more complicated computations are desirable.

Partially homomorphic schemes are able to perform only some operations. For instance, in some cases only particular types of operations such as additions may be supported. As another example, if both addition and multiplications are supported, it may be the case that one cannot use both on the same message. Furthermore, in some instances, full homomorphic encryption may only perform a limited number of operations on a message before having to send the message back to the user.

With every homomorphic operation performed on encrypted data, noise may increase in the result. If noise raises above a certain threshold, it may be impossible to correctly decrypt the data. Consequently, after a number of operations, the encrypted message may be re-encrypted to reduce the noise level of the resulting message (e.g., following the re-encryption). This operation may be referred to as "bootstrapping" and may be resource intensive.

More specifically, the most resource intensive basic operation in bootstrapping may be polynomial multiplication. Bootstrapping one logic gate, such as a NAND gate may include 2 * 6 * 1024 polynomial multiplications, where the manipulated polynomials are of degree 1023. The polynomials may have 32-bit signed integer coefficients, the coefficient arithmetic may be modular, and the least significant 32-bits may be the only bits used from the coefficients. Discussed below are techniques to reduce computation time and resources for polynomial multiplication which would allow for homomorphic encryption to be efficiently implemented and accelerated.

With that said, before discussing the techniques to reduce computation time and resources for polynomial multiplication in more detail, several examples, equations, and figures will be discussed to help provide an overview for how polynomial multiplication is performed.

**Polynomial Multiplication**

Let $P_{AL}$ and $P_{BL}$ be degree 1 polynomials having the product $P_{AL}P_{BL}$ that is a degree 2 polynomial. The product polynomial has coefficients according to Equation 1 below:

$$P_{AL}P_{BL} = (a_1X + a_0)(b_1X + b_0) = a_1b_1X^2 + X(a_1b_0 + a_0b_1) + a_0b_0$$

## Equation 1

The middle terms $a_1b_0 + a_0b_1$ may be expressed according to Equation 2 below:

$$(a_1b_0 + a_0b_1) = (a_1 + a_0)(b_0 + b_1) - (a_1b_1 + a_0b_0)$$

## Equation 2

As observed in Equation 1, $a_1b_1$, $a_0b_0$ have already been computed. Thus, the degree 1 polynomial product is able to be expressed using three scalar multiplications according to Equation 3 below:

$$P_{AL}P_{BL} = a_1b_1X^2 + X\big((a_1 + a_0)(b_0 + b_1) - (a_1b_1 + a_0b_0)\big) + a_0b_0$$

## Equation 3

The reduction from four scalar multiplications in Equation 1 to three scalar multiplications in Equation 3 for the degree 1 polynomial product is the Karatsuba-Ofman (K-O) algorithm. While the K-O algorithm may more typically be applied to individual numbers, it may also be applied to polynomials on a term-by-term basis. This may reduce the number of multiplication operations in the polynomial multiplication. However, the number of addition and subtraction operations may increase. The polynomial multiplication in Equation 1 may use four multiplication operations and three addition and/or subtraction operations. In the K-O algorithm implementation, there are addition operations before the multiplication operation, and two additional addition operations following the multiplication operation. It should be noted that a logic circuit implemented as an adder may require less circuitry compared to the logic circuit implemented as a multiplier.

The K-O algorithm may have a recursive reduction limit of $p^{~1.58}$. For a 1024 element polynomial reduction, the schoolbook method (e.g., performing the four multiplication operations shown in Equation 1) requires 1M multiplication operations. For the K-O algorithm, the theoretical limit is about 57K multiplication operations. This may be applied recursively to larger and larger polynomials. By way of example, multiplying two degree-3 polynomials may be expressed in terms of degree-1 polynomials. In this case, the pedantic method (e.g., schoolbook method) uses 16 multipliers (e.g., products to be determined), while the K-O algorithm may use at most 9 multipliers (e.g., products to be determined).

We may apply the K-O algorithm to degree 3 polynomials. Let $P_A$ and $P_B$ be degree 3 polynomials having the product $P_A P_B$ a degree 6 polynomial. The product polynomial coefficients make up the product $P_A P_B$ below according to Equation 4:

$$P_A P_B = (a_3 X^3 + a_2 X^2 + a_1 X + a_0)(b_3 X^3 + b_2 X^2 + b_1 X + b_0)$$

$$= ((a_3 X + a_2)X^2 + (a_1 X + a_0))((b_3 X + b_2)X^2 + (b_1 X + b_0))$$

$$= X^4(a_3 X + a_2)(b_3 X + b_2) + X^2((a_3 X + a_2)(b_1 X + b_0) + (a_1 X + a_0)(b_3 X + b_2)) + (a_1 X + a_0)(b_1 X + b_0)$$

## Equation 4

The middle terms $(a_3 X + a_2)(b_1 X + b_0) + (a_1 X + a_0)(b_3 X + b_2)$ may be expressed according to Equation 5 below:

$$(a_3 X + a_2)(b_1 X + b_0) + (a_1 X + a_0)(b_3 X + b_2) = ((a_3 X + a_2) + (a_1 X + a_0))((b_1 X + b_0) + (b_3 X + b_2))$$

$$= ((a_3 X + a_2)(b_3 X + b_2) + (a_1 X + a_0)(b_1 X + b_0))$$

$$= (P_{AH} + P_{AL})(P_{BH} + P_{BL}) - (P_{AH} P_{BH} + P_{AL} P_{BL})$$

## Equation 5

With the newly computed middle term as observed in Equation 5, the polynomial product may be expressed as according to Equation 6 below:

$$P_A P_B = X^4 P_{AH} P_{BH} + X^2((P_{AH} + P_{AL})(P_{BH} + P_{BL}) - (P_{AH} P_{BH} + P_{AL} P_{BL})) + P_{AL} P_{BL}$$

## Equation 6

The product observed above in Equation 6 may use only three degree 1 polynomial multiplications. As such, while degree 1 polynomial multiplications use three scalar multipliers, the degree 3 polynomial multiplication may use nine scalar multiplications.

Furthermore, all arithmetic operations may be performed modulo $2^{32}$. All operations may also be limited to their rank order. Properties of the modular multiplication used for homomorphic encryption may be expressed below in Equation 7 and Equation 8. Thus, Equation 7 may express the product $P$ as follows:

$$P = a_i b_j \bmod 2^{32}$$

## Equation 7

The $P$ in Equation 7 may consist of the lower 32 bits of the signed product $a_i b_j$. Moreover, the sum/difference may be expressed below in Equation 8:

$$S = (a_i + b_j) \, mod \, 2^{32}$$

## Equation 8

It may be observed that the carry-out produced by the integer addition can be ignored and not considered.

**Multiplier Implementation**

Although the number of multiplication operations may be reduced significantly from the schoolbook approach, multiple multipliers may be implemented, and the multipliers may be a different size than multipliers directly supported in an integrated circuit device such as an FPGA. As such, the multipliers may be constructed efficiently out of the regular DSP and soft logic resources on the integrated circuit device 12. In other words, the multiplier circuitry 26 may be implemented using a combination of soft and hard logic of the integrated circuit device 12.

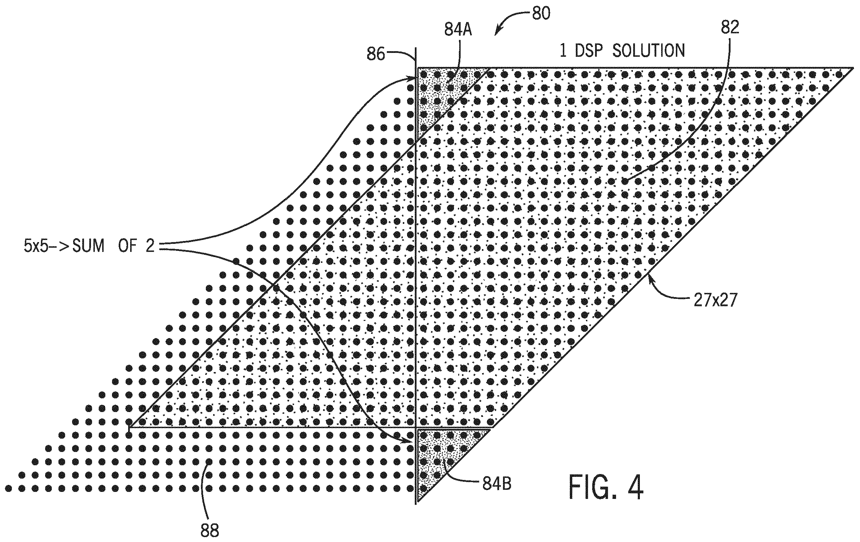

With the foregoing in mind, FIG. 4 is a diagram 80 illustrative of one implementation of a 32-bit x 32-bit multiplication operation using a digital signal processing block (DSP) to implement multiplier circuitry and soft logic of the integrated circuit device 12. In the illustrated embodiment, the DSP block may include an INT27 multiplier (e.g., a multiplier able to perform a 27-bit x 27-bit multiplication operation), and the multiplication operations (represented by dots) that the multiplier of the DSP block may perform are represented by region 82. The multiplier of the DSP block may work concurrently with an adder to complete the multiplication operations. That is, the DSP block may be extended to use a set of resources (e.g., soft logic of the integrated circuit device 12) represented as regions 84A, 84B.

To implement the operations in soft logic, the DSP block may use one or more arithmetic logic modules (ALMs), which may be included in the programmable logic 48 of FIG. 2. The total cost, in terms of hardware utilization, of a polynomial multiplication operation in ALMs may be related to the operations that are executed during different steps of the polynomial multiplication operation.

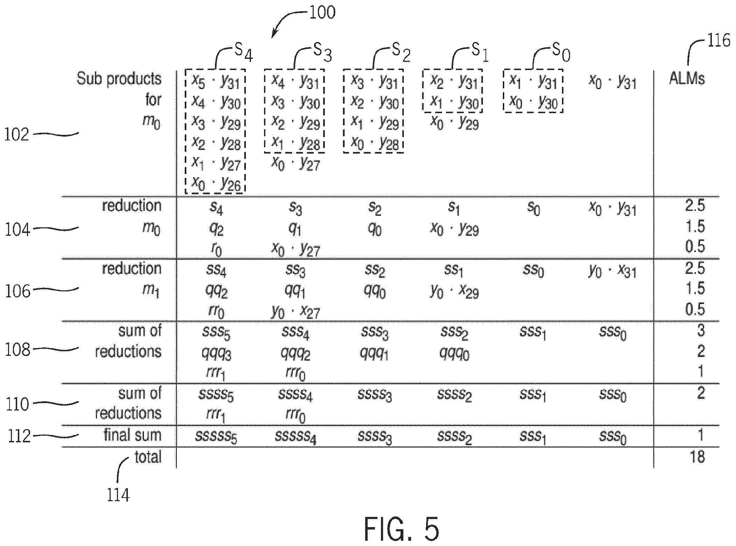

Keeping the discussion of FIG. 4 in mind, FIG. 5 illustrates a mapping of operations 100 to soft logic (e.g., ALMs) for the portion of a 32-bit x 32-bit multiplication operation performed using soft logic. A first truncated partial product ($m_0$) representing the upper truncated product between the bottom five bits of a first polynomial ($x[5:0]$) and a top five bits of a second polynomial ($y[31:26]$) and a second partial product ($m_1$) representing the upper truncated product between the bottom five bits of the second polynomial ($y[5:0]$) and the top five bits of the first polynomial ($x[31:26]$) may be summed together after a reduction of $m_0$ and $m_1$ is completed.

At row 102, sub-products for $m_0$ are illustrated. A first row of sub-products [$x_5 * y_{31}, x_4 * y_{31}, x_3 * y_{31}, x_2 * y_{31}, x_1 * y_{31}$] is summed with a second row of sub-products: [$x_4 * y_{30}, x_3 * y_{30}, x_2 * y_{30}, x_1 * y_{30}, x_0 * y_{30}$] to produce the bits of s: [$s_4, s_3, s_2, s_1, s_0$]. Similarly, [$x_3 * y_{29}, x_2 * y_{29}, x_1 * y_{29}$] and [$x_2 * y_{28}, x_1 * y_{28}, x_0 * y_{28}$] are summed together to produce q: [$q_2, q_1, q_0$]. Finally, [$x_1 * y_{27}$] and [$x_0 * y_{26}$] are summed to produce r: [$r_0$]. This reduction may be illustrated in row 104 with the corresponding alignments of these sums. Note that the carry-out that may be returned by the sums is not utilized. The reductions for $m_0$ may be illustrated in row 104 and the reductions for $m_1$ may be illustrated in row 106. For every product that is not a part of a pair, the reduction may be equal to the product itself, as seen in the first, third, and fifth column of row 104 and row 106. It should be understood that the reductions for $m_1$ may be similarly applied to the reductions for $m_0$, where the reductions for $m_1$ reflect the partial products of the operations on the set of bits described above.

At row 108, a first set of reductions for $m_0$ and $m_1$ are summed together. That is, the summations for each variable (e.g., s, q, r), a summation is performed, and the carry-out is ignored. At row 110, a second set of reductions for a first set of reductions for $m_0$ and $m_1$ are summed together. That is, an addition operation between the first variables (e.g., s) and the second variables (e.g., q) is performed. At row 112, a final summation of reductions between all three variables is performed to reach a summation expressed by a single variable (e.g., s). Again, as with previous summations, the carry-out will be ignored.

For each row 102 to row 112, an associated amount of ALMs 116 may be determined. It should be observed that each reduction on a set of two products may use 0.5 ALMs. As such, the operations of row 104 may use 4.5 ALMs, the operations of row 104 may use 4.5 ALMs, the operations of row 108 may use 6 ALMs, the operations of row 110 may use 2 ALMs, and the operations of row 112 may use 1 ALM. This leads to a total 114 of 18 ALMs. The sum produced at row 112 needs to be summed with the INT27 product implemented using the DSP Block. Using their relative alignment as depicted in FIG.4, the sum only involves the addition of two strings of 5 bits, for a total cost of 2.5 ALMs. Accordingly, a 32-bit by 32-bit multiplication operation where only the bottom 32 bits of the 64-bit product are returned may be implemented using an INT27 multiplier and 20.5 ALMs.

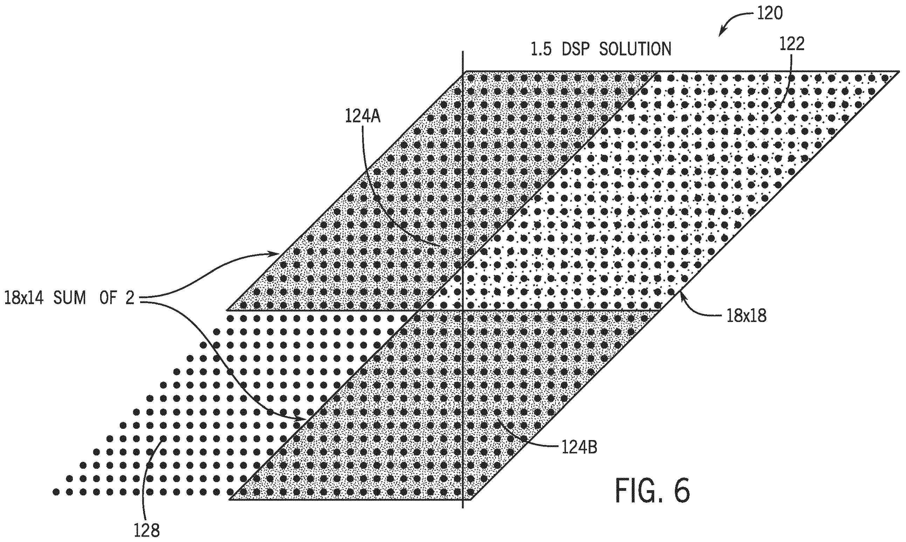

Furthermore, FIG. 6 illustrates an alternative implementation of a 32-bit by 32-bit multiplication in which 1.5 DSP blocks are utilized (meaning three DSP blocks would be able to perform two such multiplication operations). A first DSP block may have the resources to implement an 18-bit x 18-bit multiplication operation, represented by area 122. Another DSP block (or rather, half of the multiplier resources of the other DSP block) may be utilized to perform the multiplication operations associated with the areas 124A, 124B. The DSP block may internally perform the sum of the two partial products 124A and 124B, and return a 37-bit sum. The bottom 14-bits of this partial product sum are added to bits [31:18] of partial product 122. This sum may require 7 ALMs to implement. Accordingly, the 32-bit by 32-bit multiplication operation where only the bottom 32 bits of the 64-bit product are returned may be implemented using 1.5 DSP blocks and 7 ALMs.

**K-O Polynomial Construction**

Furthermore, Equation 6 may be described in terms of operations and results, as described in Equation 9 below:

$$P_X P_Y = \underbrace{\underbrace{x_1 y_1}_{mult\_1} X^2}_{R\_2} + \underbrace{X\underbrace{(\underbrace{(x_1 + x_0)}_{add\_0}\underbrace{(y_1 + y_0)}_{add\_1}}_{mult\_2} - \underbrace{(\underbrace{x_1 y_1}_{mult\_1} + \underbrace{x_0 y_0}_{mult\_0})}_{add\_2})}_{sub\_0} + \underbrace{x_0 y_0}_{\substack{mult\_0 \\ R\_0}}}_{R\_1}$$

# Equation 9

That is, each operation (e.g., addition operations *add*_0, *add_1,* the multiplication operations *mult_0, mult_1, mult_2*, and the subtraction operation *sub_0*) may be related to operations in a polynomial multiplication operation $P_X P_Y$, where $P_X$ may include coefficients $x_i$ and $P_Y$ may include coefficients $x_j$ value. By way of example, a polynomial $P_X$ may include coefficients *X0* and *X1*. A second polynomial $P_Y$ may include coefficients *Y0* and *Y1.*

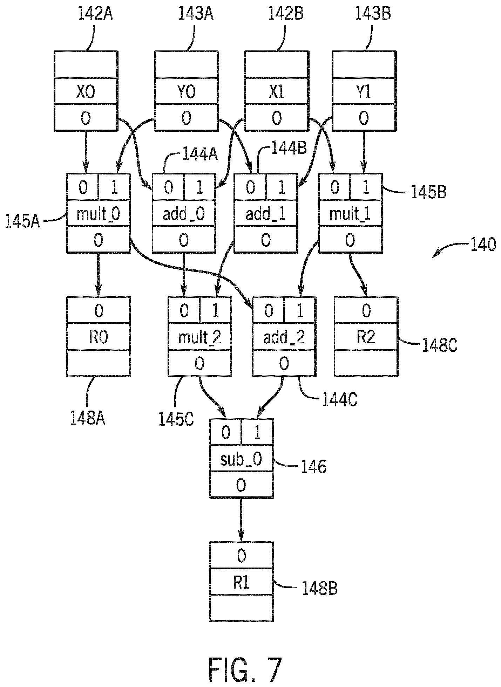

Keeping the discussion of Equations 1-9 in mind, FIG. 7 illustrates the dependencies between arithmetic operations for a first degree polynomial multiplication operation when the K-O algorithm is applied. In particular, FIG. 7 includes a graph 140 showing such dependencies. As indicated in graph 140, input 142 includes sub-inputs 142A,142B, which respectively correspond to polynomial $P_X$ coefficients *X0* and *X1*. A second input 143 also consists of sub-inputs 143A and 143B which correspond to polynomial $P_Y$ coefficients Y0 and Y1. As further indicated in the graph 140, three multiplication operations 145 (e.g., multiplication operations 145A-145C, *mult_0, mult_1, mult_2*) and five addition or subtraction operations (e.g., addition operations 144A-144C, *add_0, add_1, add_2* and subtraction operation 146, *sub_0*) are performed. As illustrated, addition operation 144A and multiplication operation 145A depend on the sub-input 142A, addition operation 144B and multiplication operation 145A depend on the sub-input 143A, addition operation 144A and multiplication operation 145B depend on the sub-input 142B, and addition operation 144B and multiplication operation 145B depend on the sub-input 143B. Additionally, addition operation 144C depends on multiplication operations 145A and 145B, multiplication operation 145C depends on addition operations 144A and 144B, and subtraction operation 146 depends on multiplication operation 145C and addition operation 144C. The multiplication operation 145A may store its product as an output 148A, the subtraction operation 146 may store its resultant as an output 148B, and the multiplication operation 145B may store its product as an output 148C. In this manner, the multiplication operation of Equation 9 may be performed.

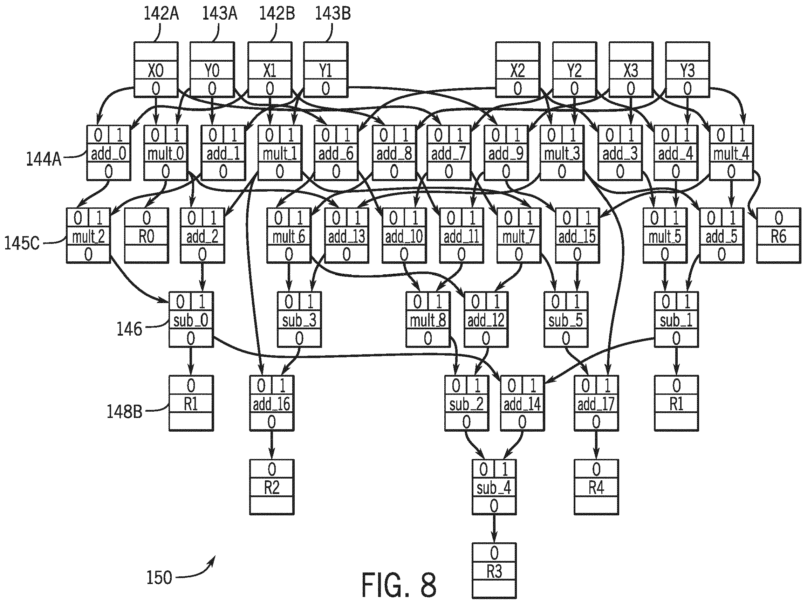

The technique described above may be applied to polynomial multiplication involving higher degree polynomials. Indeed, FIG. 8 illustrates a graph 150 of the dependencies between arithmetic operations for a third degree polynomial multiplication operation when the K-O algorithm is applied. As illustrated in FIG. 8, there are eight total sub-inputs that undergo operations to achieve seven outputs. The graph 150 illustrates the flow of data and the dependencies of each operation in the graph 150. It should be noted that the dependencies of the addition operations 144, multiplication operations 145, and the subtraction operations 146 may be different depending on the degree of polynomial undergoing polynomial multiplication.

**Preparing for Folding**

However, polynomial multiplication may create inconsistent datatypes due to the reuse of arithmetic operations (e.g., addition operations 144, multiplication operations 145, and the subtraction operations 146). By way of example, the multiplication of the first degree polynomial (with two coefficients) may create a second degree polynomial (with three coefficients). The K-O algorithm expansion of this to the third degree polynomial may use three first degree polynomial multiplications. Furthermore, the first degree polynomial multiplications may use the alignment and addition of three second degree polynomials (where each second degree polynomial includes three coefficients).

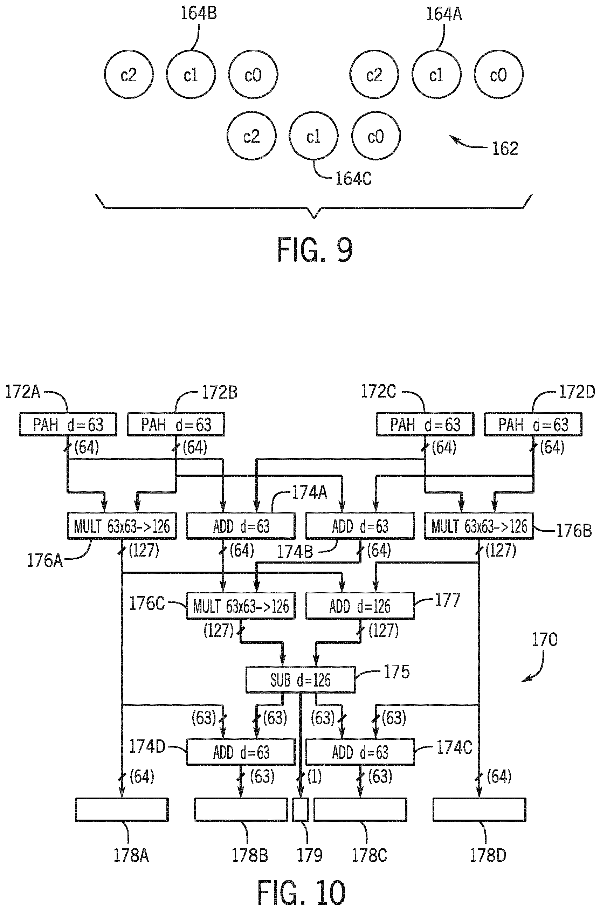

With the foregoing in mind, FIG. 9 illustrates an example of coefficient alignments in a degree 3 polynomial multiplication as shown in Equation 7. Three degree 2 polynomials coefficients corresponding to $X^0$, $X^2$ and $X^4$ are shown in the figure. The alignment shows that in order to add polynomial 164A with polynomial 164B, the polynomial 164B is to be aligned to the left by two coefficient positions. Similarly, when adding polynomial 164C and polynomial 164B, the polynomial 164C should also be aligned left by two positions. The situation observed in FIG. 9 may be described below with polynomial multiplication between two degree-127 polynomials. Let A and B be the two 127 degree polynomials, as expressed in Equation 10 below:

$$A = \sum_{i=0}^{127} a_i X^i$$

$$B = \sum_{i=0}^{127} b_i X^i$$

**Equation 10**

Furthermore, A and B may be decomposed as shown below in Equation 11:

$$A = X^{64} \sum_{i=0}^{63} a_{i+64} X^i + \sum_{i=0}^{63} a_i X^i = X^{64} A_H + A_L$$

$$B = X^{64} \sum_{i=0}^{63} b_{i+64} X^i + \sum_{i=0}^{63} b_i X^i = X^{64} B_H + B_L$$

**Equation 11**

The product P of the two polynomials may be expressed in terms of the four degree 63 polynomials $A_H$, $A_L$, $B_H$, $B_L$, as shown below in Equation 12:

$$P = AB = (X^{64} A_H + A_L)(X^{64} B_H + B_L) = X^{128} A_H B_H + X^{64}(A_H B_L + A_L B_H) + X^0 A_L B_L$$

**Equation 12**

By taking the contributions of the three powers of $X^0$, $X^{64}$ and $X^{128}$, it may be seen that these contributions have degree 126, due to being a product (or sum of products) of degree-63 polynomials. Regarding their alignment, the upper 63 coefficients associated to $X^0$ overlap over the lower 63 coefficients of $X^{64}$. Similarly, the upper 63 coefficients associated to the contribution of $X^{64}$ overlap over the lower 63 coefficients of $X^{128}$.

The final value in coefficient $X^{127}$ is obtained directly as coefficient $X^{63}$ of the term $A_H B_L + A_L B_H$. When the K-O algorithm is used in order to reduce the number of polynomial multiplications from four to three, some additional adders and subtractors-operating on polynomial degrees ranging from 62 to 126 - may be used.

In the case that the K-O algorithm is used in order to reduce the number of polynomial multiplications from four polynomial multiplications to three polynomial multiplications, additional adder circuits and subtraction circuits may be implemented. To implement this, three polynomial adder circuits (a degree 62 polynomial adder circuit, a degree 63 polynomial adder circuit, and a degree 126 polynomial adder circuit) may be used. Additionally, a degree 126 polynomial subtractor circuit may additionally be used. The degree 62 polynomial adder circuit may be used for overlapping additions at the end of the polynomial multiplication operation. The degree 63 polynomial adder circuit may be used for the K-O algorithm pre-additions. The degree 126 polynomial adder circuit may be used for summing $A_H B_H + A_L B_L$.

With the foregoing in mind, FIG. 10 illustrates a block diagram 170 of a degree 127 polynomial multiplication where the input polynomials are split into degree 63 polynomials. An upper set of coefficients 172A for a first input and an upper set of coefficients 172B for a second input may be inputs to a degree 63 multiplier 176A. The upper set of coefficients 172A may be a first input to a degree 63 adder 174A. The upper set of coefficients 172B may a first input to a degree 63 adder 174B. Moreover, a lower set of coefficients 172C for the first input and a lower set of coefficients 172D for the second input may be transmitted as inputs to a degree 63 multiplier 176B. The lower set of coefficients 172C may be a second input to the degree 63 adder 174A. The lower set of coefficients 172D may be a second input to a degree 63 adder 174B. A degree 126 polynomial output of the degree 63 polynomial multiplier 176A and a degree 126 output of the multiplier 176B may be transmitted as inputs to a degree 126 adder 177.

An output of the degree 63 adder 174A and an output of the degree 63 adder 174B may be transmitted as inputs to a degree 63 multiplier 176C. An output of the degree 63 multiplier 176C and an output of the degree 126 adder may be transmitted as inputs to a degree 126 subtractor 175. The output of the degree 126 subtractor 176 may be split into a first output (of a degree 62), a second output (of a degree 62), and a third output (the most significant bit). The first output of the subtractor 176 may be transmitted as an input to a degree 62 adder 174D and the second output of the subtractor 176 may be transmitted as an input to a degree 62 adder 174C. The degree 62 adder 174D may receive the first output of the subtractor 175 and 63 coefficients from the output of the multiplier 176A. The degree 62 adder 174C may receive the second output of the subtractor 175 and 63 coefficients from the output of the multiplier 176B. The adders 174C and 174D may output a degree 62 polynomial 178B, 178C, respectively. The additional 64 coefficients from the output of the multiplier 176A may be a degree 63 polynomial 178A and the additional 64 coefficients from the output of the multiplier 176B may be a degree 63 polynomial 178D. The third output of the subtractor may be the most significant bit 179.

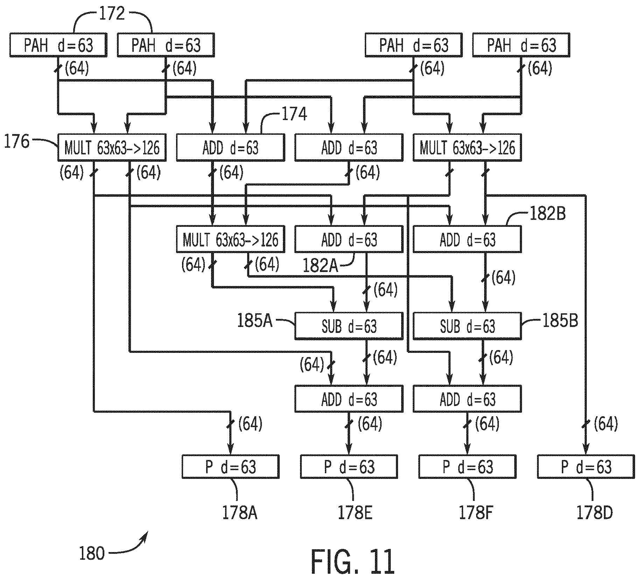

Upon multiplying the degree-63 polynomials, the product may have values appended after the most significant coefficient to change the product to degree 127. Moreover, we may split the output of the polynomial multiplier into a high part (upper 64 coefficients, most significant coefficient set to 0) and a lower part (lower 64 coefficients). Using this change, we obtain the block diagram 180 of FIG. 11, which includes only three types of operands: degree-63 multipliers, adders, and subtractors, and all data buses in the architecture are 64 elements wide. The changes presented in FIG. 11 allow for a regular structure which simplifies its execution on resource-constrained architecture. Furthermore, it should be noted that any polynomial decomposition may have an "extra" term to contend with.

With the 63 coefficient polynomials extended to 64 coefficient polynomials, the degree 127 adders and subtractors may be split into individual degree 63 adders and subtractors. The block diagram 180 may follow a very similar data flow as the block diagram 170. However, due to the insertion of a "0" valued coefficient to change the inputs to be 64 bits, the degree 126 adder 177 may be split into degree 63 adders 182A, 182B. Furthermore, the degree 126 subtractor 175 may be split into degree 63 subtractors 185A, 185B. This may produce new outputs 178E and 178F at the end of the data flow, where each output 178E and 178F may each be a degree 63 polynomial with 64 coefficients. By using an implementation in accordance with FIG. 11, the misalignment illustrated in FIG. 9 may be avoided.

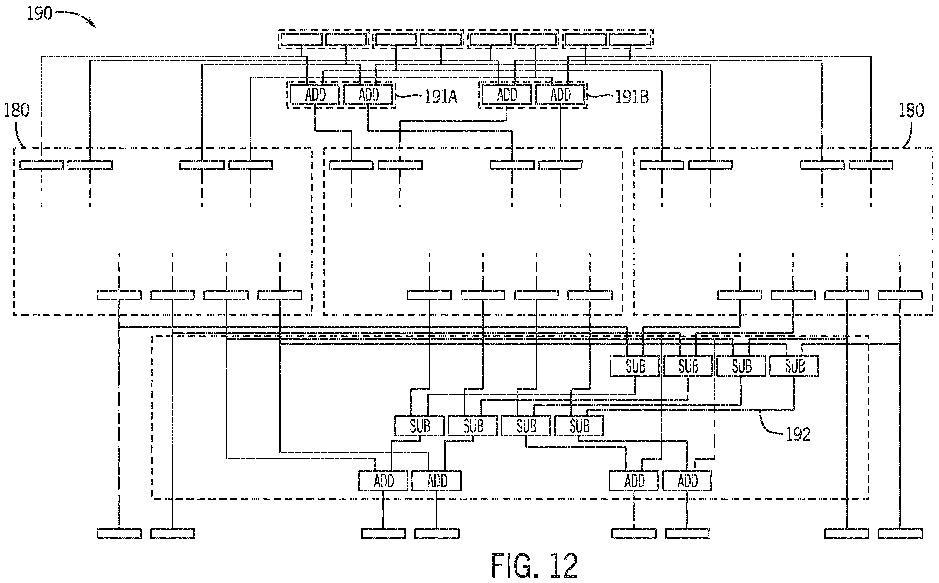

As shown in FIG. 12, the techniques discussed above with respect to FIG. 11 may recursively be used to decompose degree-255 polynomials. The Karatsuba pre-adders (operating on degree 127 polynomials) are split into two distinct degree 63 adders. FIG. 12 illustrates a block diagram 190 with three implementations of the block diagram 180 to implement the degree 255 polynomial multiplication. Degree 63 pre-adders 191A, 191B may be used to process the polynomial for polynomial multiplication.

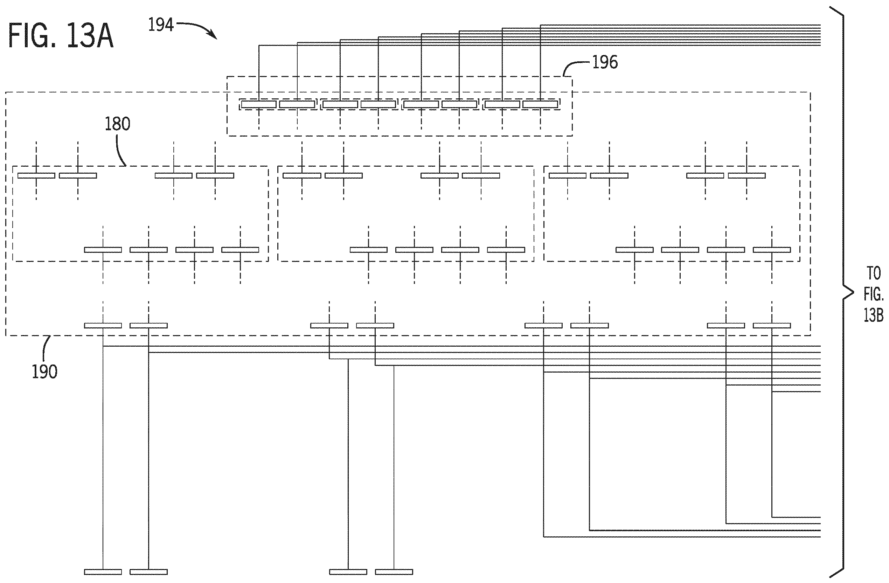

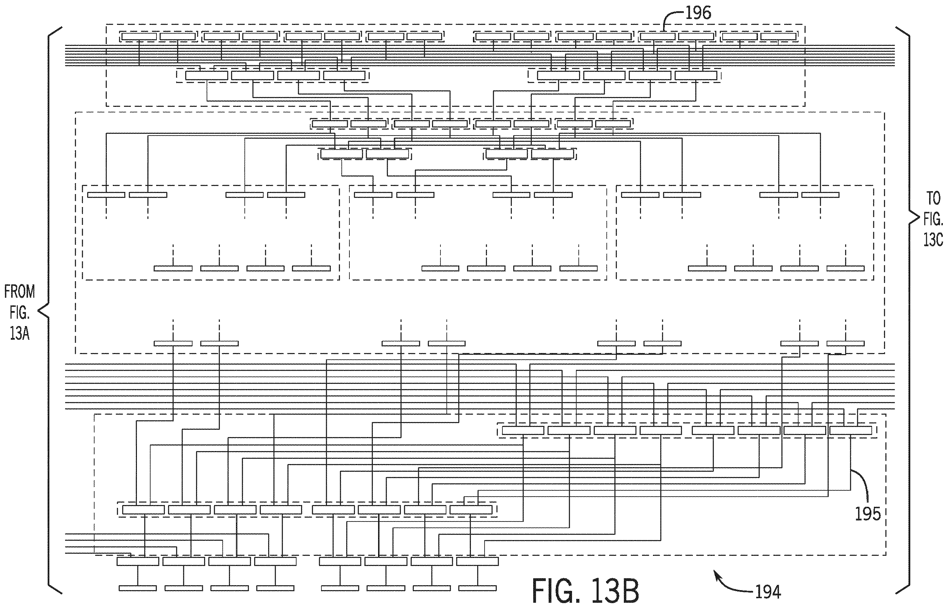

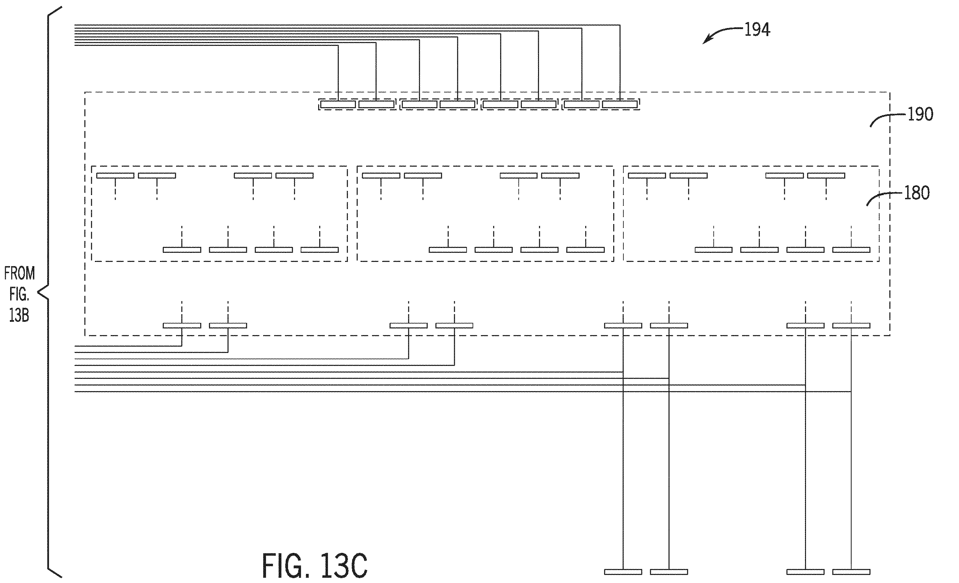

Furthermore, this may recursively be used to decompose degree-511 polynomials. The degree 511 polynomial multiplication is illustrated in diagram 194 of FIGS. 13A-13C. The block diagram 194 with three implementations of the block diagram 190 to implement the degree 511 polynomial multiplication. Each block diagram 190 may include three implementations of the degree 127 polynomial multiplication. A circuit of degree 63 pre-adders 196 may be used to process the polynomial for polynomial multiplication. That is, the degree 511 polynomial multiplication may be implemented via nine of the degree 127 polynomial multiplications. There may be a circuit of adders and subtractors 195 which use the outputs of the polynomial multiplication performed in the block diagrams 190. The circuit of adders and subtractors 194 may compute the final result of the degree 511 polynomial multiplication.

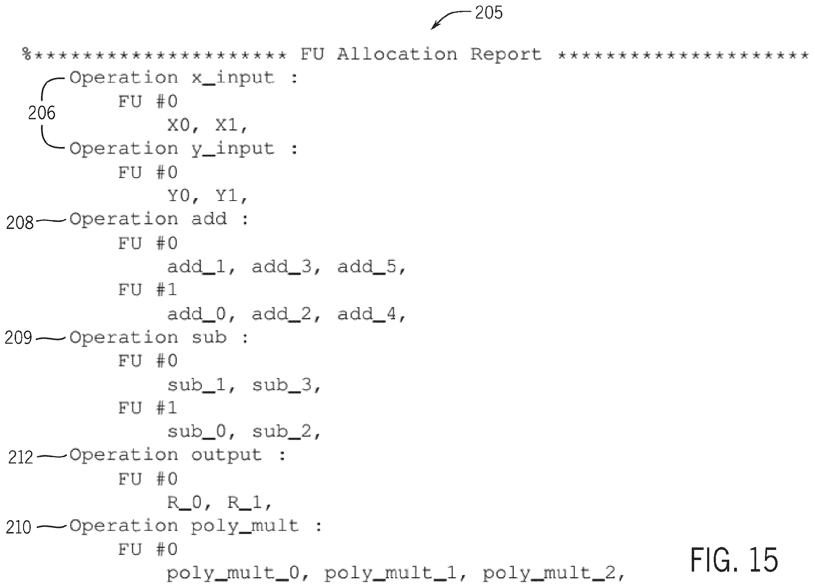

With the foregoing in mind, FIG. 15 illustrates a graph 198 of dependencies for a degree 511 polynomial multiplication. The graph 198 merely illustrates the flow of data and the dependencies of each operation for the degree 511 polynomial. It should be noted that the dependencies of the addition operations 144, multiplication operations 145, and the subtraction operations 146 may be different depending on the degree of polynomial undergoing polynomial multiplication.

**Polynomial Reduction**

In order to create a degree 2046 polynomial, two degree 1023 polynomials may be multiplied together. The degree 2046 polynomial may be reduced back to a 1023-degree polynomial due to the constraints of the current embodiments. This may be accomplished by calculating the reduction modulo value $X^N+1$. To illustrate this type of polynomial reduction, below is an example of reducing a degree-6 polynomial down to a degree-3 polynomial.

Equation 13 below is an example of degree 6 polynomial product reduction. P is a degree 6 polynomial product. In order to reduce the degree 6 polynomial product to a degree 3 polynomial, the degree 6 polynomial may be reduced by a factor M (e.g., P is divided by M). The resulting degree 3 polynomial may be represented as R.

$$P = a_6x^6 + a_5x^5 + a_4x^4 + a_3x^3 + a_2x^2 + a_1x^1 + a_0$$
$$M = x^3+1$$
$$R = a_3x^3 + (a_2-a_6)x^2 + (a_1-a_5)x^1 + (a_0-a_4)$$

# Equation 13

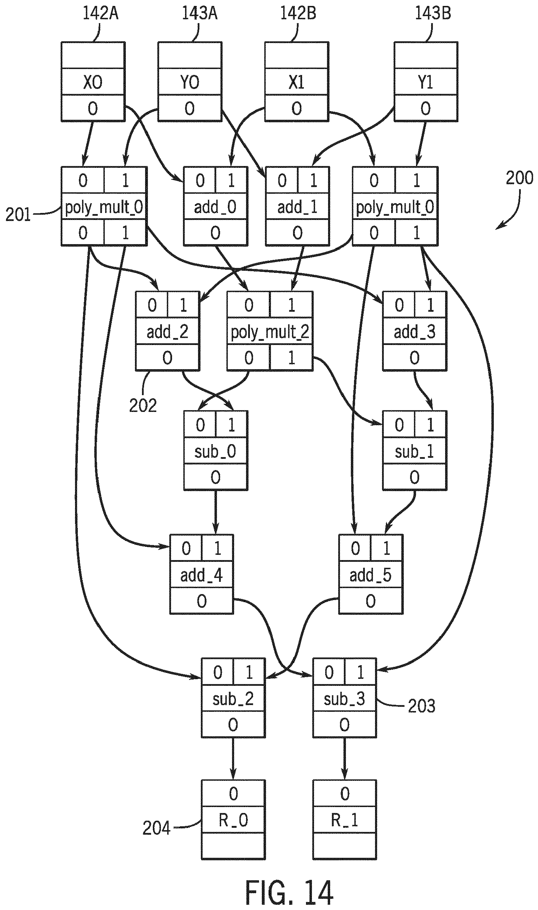

The subtraction operations required for this modular reduction may be directly implemented into the current embodiments for polynomial multiplication. Indeed, FIG. 14 illustrates a graph 200 of operations associated with a polynomial multiplication and polynomial reduction based on a single-level Karatsuba decomposition. There are three polynomial multipliers 201 (e.g., *poly_mult_0, poly_mult_1, poly_mult_2*), six adders 202 (*add_0, add_1, add_2, add_3, add_4, add_5*), and four subtractors 203 (*sub_0, sub_1, sub 2, sub_3*). The reduced values are outputs 204. That is, the reduction of degree 1 polynomial multiplication may have two outputs 204 of the same degree as inputs 142A-B, 143A-B.

An architecture that allows executing the nodes of this graph must therefore have at least one compute unit of each type: one polynomial multiplier, one polynomial adder and one polynomial subtractor. The minimum set of compute units while accounting for the number of nodes of each type results in one multiplier, two adders, and two subtractors. The operations may be assigned to one of the functional units, as illustrated by FIG. 15. That is, FIG. 15 illustrates a functional unit allocation report 205, which may include the allocations associated with the one multiplier, two adders, and two subtractors mentioned here to perform the operations indicated by the graph 200. The functional unit allocation report 205 may include one or more inputs 206 of the degree 1 polynomial multiplication, an addition operation 208 with two functional units (e.g., two adders), a subtraction operation 209 with two functional units (e.g., two subtractors), a multiplication operation 210 with one functional unit (e.g., one multiplier). The functional unit allocation report 205 may further include outputs 212.

For each valid polynomial multiplication and reduction circuit, a valid modulo schedule may be created, for example, by the design software 14 or processing circuitry executing the design software 14. There are multiple valid schedules for each valid polynomial multiplication and reduction circuit. The modulo schedule may allow for maximum utilization of the polynomial multiplier, the adders, and/or subtractors. That is, each operation may include one or more dependencies from other operations, as discussed earlier. Therefore, each operation may be scheduled to execute depending on the dependencies as illustrated in the example of the graph 200. It should be noted that the graph 200 is not limiting and merely an example of a graph of dependencies within a polynomial multiplication and reduction operation.

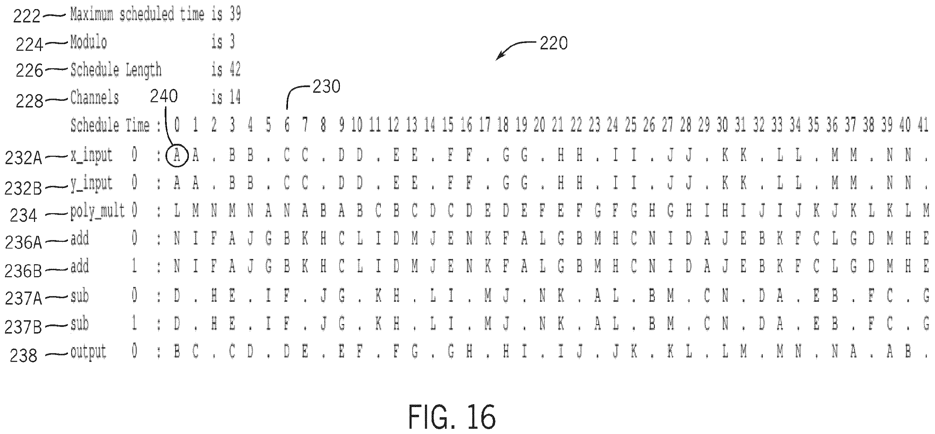

With the foregoing in mind, FIG. 16 illustrates an example modulo schedule 220 for a single-level Karatsuba decomposition based polynomial multiplication. The example modulo schedule 220 may include a maximum schedule time 222, a modulo value 224, a schedule length 226, an amount of channels 228, and/or a schedule layout 230. The maximum schedule time 222 is associated with a maximum amount of clock cycles necessary to complete the operations on one set of the inputs. The modulo value 224 is associated with the number of polynomial multipliers in graph 200. The schedule length 226 is an amount of clock cycles used to show the execution of operations. The amount of channels 228 is the number of polynomial multiplication operations being performed (the operations associated with each being indicated by a letter (AN) in the modulo schedule 220) by the circuitry concurrently. Each of the above described aspects of the example modulo schedule 220 may be determined based at least upon the dependencies of operations in a given polynomial multiplication and reduction circuit.

The example modulo schedule 220 may include rows for a first input 232A, a second input 232B, a polynomial multiplication operation 234, addition operations 236A and 236B, subtractor operations 237A and 237B, and an output 238, each of which indicates when particular circuitry is being utilized and for which channel the circuitry is being used. It may be observed that the amount of operations for each type (e.g., polynomial multiplication, addition, subtraction) is the same as the minimum operations described in the functional unit allocation report 205.

A channel "A" 240 will be discussed to help illustrate the scheduling and execution of the example modulo schedule 220. During the first two clock cycles, the channel "A" 240 may represent the reading of the inputs 142A, 142B (e.g., the first inputs 232A), 143A, and 143B (e.g., the second inputs 232B). That is, the inputs 142A and 143A are read during a first clock cycle and the inputs 143A and 143B are read during a second clock cycle. At clock cycle 3 the values in the channel "A" 240 undergo a set of addition operations performed by the adders. At a clock cycle 5, the values in the channel "A" 240 undergo a first polynomial multiplication operation performed by the polynomial multiplier. At a clock cycle 7, the values in the channel "A" 240 undergo a second polynomial multiplication operation. At a clock cycle 9, the values in the channel "A" 240 undergo a third polynomial multiplication operation. At a clock cycle 19, the values in the channel "A" 240 undergo a set of addition operations. At a clock cycle 23, the values in the channel "A" 240 undergo a set of subtraction operations performed by the subtractor. At a clock cycle 29, the values in the channel "A" 240 undergo a set of addition operations. At a clock cycle 33, the values in the channel "A" 240 undergo a set of subtraction operations performed by the subtractor. At clock cycles 37 and 39, the values in the channel "A" 240 are provided as outputs. It should be observed that the values in the channel "A" 240 correspond to the dependencies illustrated in the graph 200.

The dependencies between different operations may provide the minimum schedule length possible to perform all the operations. As illustrated by tracking the channel "A" 240 through the example modulo schedule 220, the channel "A" 240 may represent one or more paths through the graph 200. The addition/subtraction operations and the polynomial multiplication operations are independently scheduled. In some embodiments, the example modulo schedule 220 may be filled out completely by wrapping the operations performed on particular values in particular channels (e.g., the values of the channel "B").

As discussed above, the example modulo schedule 220 has one polynomial multiplication operation that has a data dependency on the outputs of the addition operation, however, the other two polynomial multiplication operations have a data dependency on the inputs 232A, 232B. There are addition operations and subtraction operations that have data dependencies on the polynomial multiplication operations, and in some cases, on addition operations following the polynomial multiplication operations. The latency of the polynomial multiplication operation is five cycles in this example, which leads to thirty-seven cycles completing until the first channel "A" 240 output is ready. Multiple threads (e.g., channels) may be interleaved into this structure. It should be observed that the polynomial multiplication operation functional unit is utilized on every clock cycle (as indicated by 234), as are the two adders to perform addition operations (as indicated by 236A, 236B). As observed, there are some NOPs in the subtractors. This is to be expected as there are two subtractors but a fewer amount of subtraction operations compared to the addition operations. The entire schedule operates modulo 42 scheduler with later channels (such as L, M, N) appearing in early clock cycle slots (e.g., 0, 1, 2, etc.).

The data for each operation may need to be produced and stored in memory where it is read without contention. However, contention may occur due to hardware limitations. During the same cycle, the same storage unit may not be read from twice. However, limited storage would lead to values being stored in the same storage unit. As such, the virtual storage units may be checked for multiple simultaneous reads. If a multiple simultaneous read is detected, these virtual units are to be split into multiple physical storage units. Although true dual port capability is supported on FPGA memories, this often increases the local complexity (either inside the memory, or by emulating the functionality in the surrounding logic), so multiple copies of the same memory are preferable. This also decreases local routing stress.

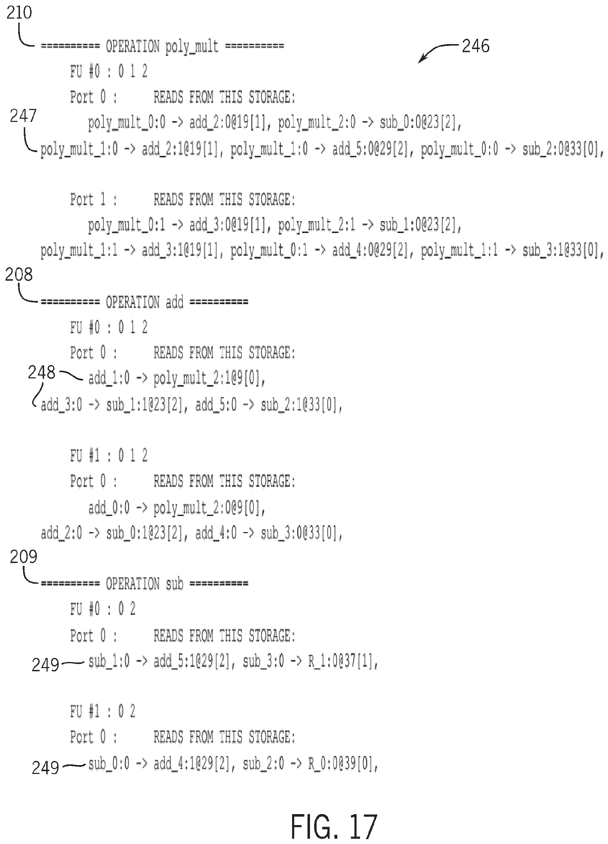

With the foregoing in mind, FIG. 17 illustrates an operational storage report 246, which may also be generated by executing the design software 14. For each operation (e.g., the polynomial multiplication operation 210, the addition operation 208, the subtraction operation 209), an operation may store its result to be accessed for the next operation that depends on it in a storage unit. By way of example, a memory sequence 247 may illustrate how a product of a polynomial multiplication operation may be stored in a first storage unit to be read for an addition operation at a particular clock cycle. Reading from a storage unit may be facilitated at a first port or a second port. In another example, a memory sequence 248 may illustrate how a sum of an addition operation may be stored in a second storage unit to be read for a polynomial multiplication operation at a particular clock cycle. In a further example, a memory sequence 249 may illustrate how a result of a subtraction operation may be stored in a third storage unit to be read for an addition operation at a particular clock cycle. The reads and writes to memory described herein for FIG. 17 may resemble the dependencies described above in FIG. 14 and FIG. 16.

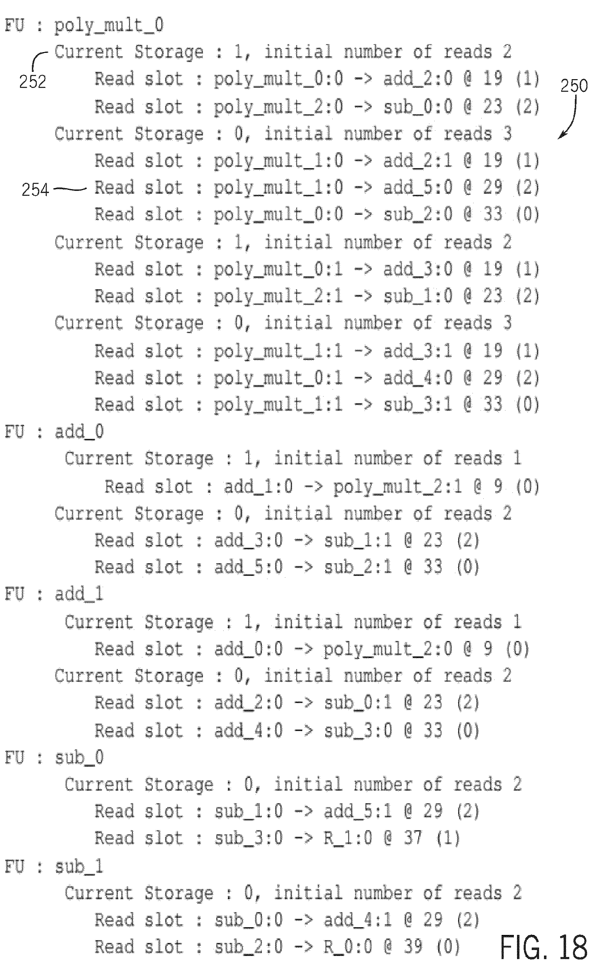

Furthermore, FIG. 18 illustrates an operational storage report 250 (which may generated by executing the design software 14) for reading from one or more storage units. The functional unit for polynomial multiplication operation 210 may use a first storage and a second storage (e.g., storage included on the integrated circuit device 12) to store products for reading later. A first set of read commands 252 illustrates how the products from the *poly_mult_0* operation are read into the *add_2* operation as input and into the *sub_2* as an input from a first storage unit. A second set of read commands 254 illustrates how the products from the *poly mult 1* operation are read into the *add_2* operation as input, the *add5* operation as an input, and into the *sub_0* as an input from a second storage unit. The reading of these results from the *poly mult 0* and *poly_mult 1* operations illustrate the dependencies present in a degree N polynomial multiplication and reduction circuit.

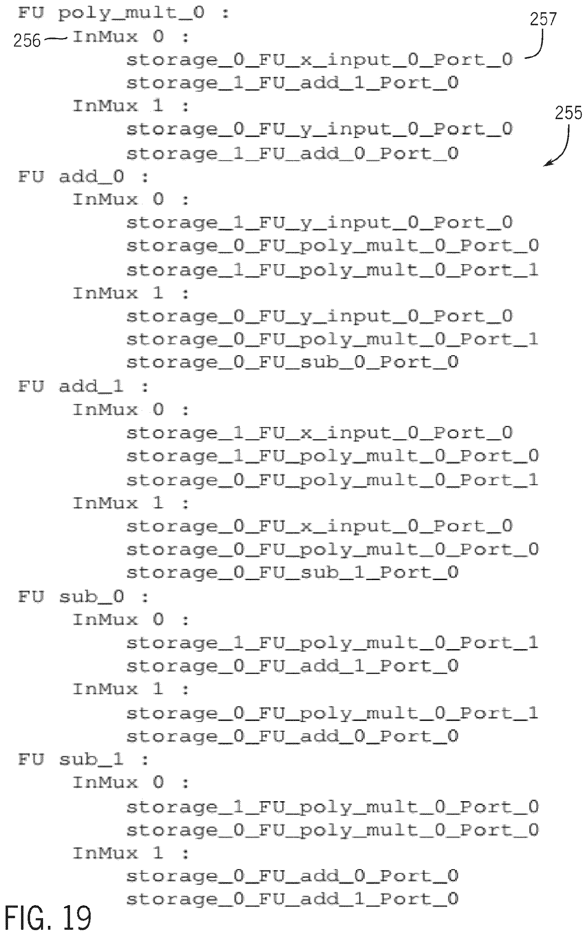

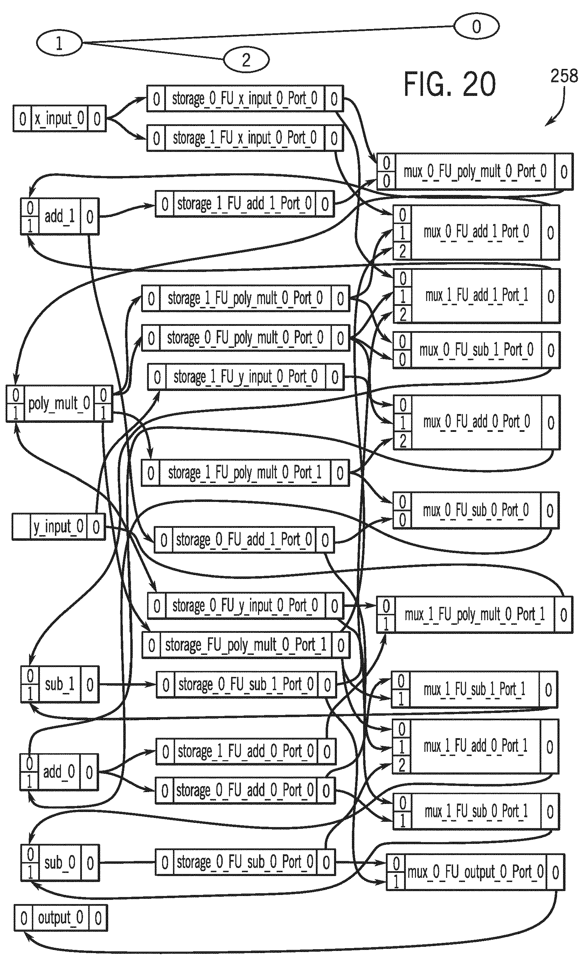

Moreover, FIG. 19 illustrates a multiplexer mapping report 255 for mapping the storage of resultants to the inputs of the compute units. By way of example, the first multiplexer 256 ensures that the first data port of the polynomial multiplier (Port 0) is connected to the storage element that may store the input 142A, and also to one of the storage element (storage 1) of adder add_1. The operational storage reports 246 and 250 and the multiplexer mapping report 255 may be translated into a graph 258, as illustrated by FIG. 20. The graph 258 illustrates how the multiplexer routings described in the multiplexer mapping report 255 are implemented to store the correct data and to read from the correct ports (e.g., the first port and the second port) of the storage being used.

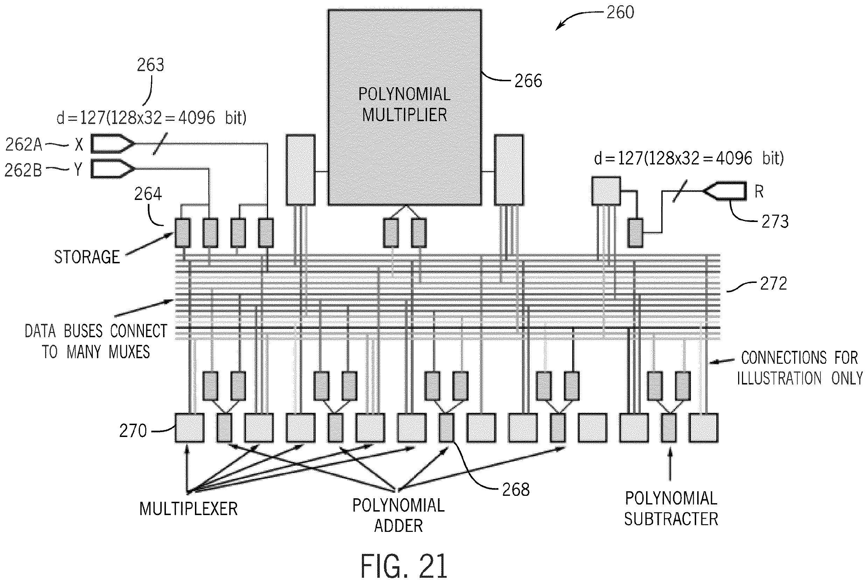

Continuing with the drawings, FIG. 21 illustrates a block diagram of a folded polynomial multiplier 260 that may be designed based on the operational storage reports 246 and 250 and the multiplexer mapping report 255. The folded polynomial multiplier 260 may be an embodiment of the multiplier circuitry 26 of FIG. 1. The folded polynomial multiplier 260 may include a first input 262A and a second input 262B. The data width of each wire from the first input 262A and the second input 262B may be 4096 bits to carry a degree 127 polynomial (e.g., due to there being 128 terms each having a 32-bit coefficient). The wires from the first input 262A and the second input 262B may transmit a signal to one or more storage units 264 with values that will be multiplied (e.g., when performing a polynomial multiplication). The storage units 264 may be connected to one or more multiplexers and route data throughout the polynomial multiplier 260 (as indicated by a multiplexer mapping report) via data buses 272. It should be observed that the data buses 272 may include a very high density of wires. In other words, the illustrated data buses 272 are not limiting, and there may be more wires used to couple the components of the folded polynomial multiplier 260. The data buses 272 are connected to a polynomial multiplier 266. As may be observed in the folded polynomial multiplier 260, a large portion of the folded polynomial multiplier 260 is dedicated to the operations of the polynomial multiplier 266. It should be understood that this logical structure is identical for any size polynomial and any size multiplier. A multiplier radix (e.g., the degree of the polynomial multiplier inside it) is independent of the polynomial size (e.g., amount of coefficients). The data buses 272 are connected to polynomial adders and subtractors 268 and multiplexers 270. A result of the operations of the folded polynomial multiplier 260 may be transmitted as an output 273. Accordingly, the multiplication, addition, and subtraction operations described above (e.g., when discussing examples of polynomial multiplication) may be applied to perform relatively larger polynomial multiplication operations using the folded polynomial multiplier 260.

However, the wiring density of the folded polynomial multiplier 260 may undesirably large for certain polynomial multiplication operations, such as those involving even higher degree polynomials (e.g., degree 1023 polynomials) and where the polynomial multiplier 266 operates on high degree polynomials (e.g., degree 128 polynomial with 32-bit coefficients). Each data bus 272 is 4096 bytes wide, which is driven by the radix of the polynomial multiplier 266. By manipulating the radix, the amount of wiring may be reduced, but it may also reduce the performance of the solution (e.g., relative to the folded polynomial multiplier 260).

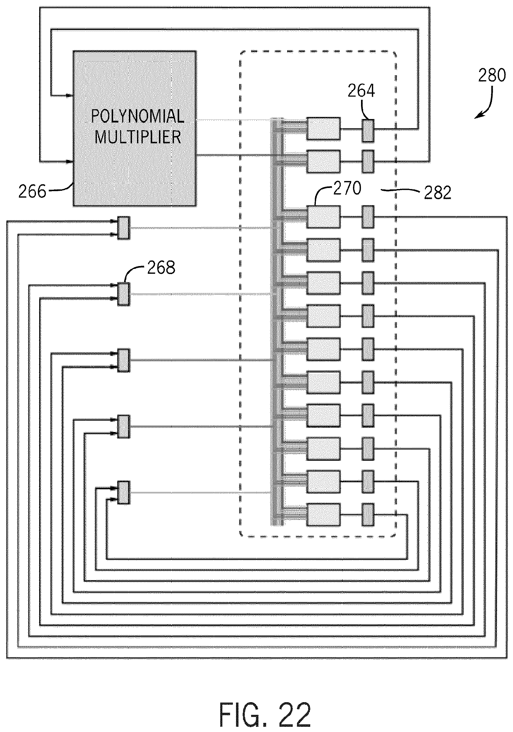

Another embodiment of the polynomial multiplier and reduction circuit is illustrated in FIG. 22. FIG. 22 illustrates polynomial multiplier circuitry 280 including the polynomial multiplier 266, adder/subtractors 268, and a set 282 of multiplexers 270 and storage units 264. The polynomial multiplier circuitry 280 may be an embodiment of the multiplier circuitry 26 of FIG. 1. In the polynomial multiplier circuitry 280, all communications area are limited to local functional blocks. It should be noted that communications between different sections of the polynomial multiplier circuitry 280 (e.g., to perform the addition operations, the polynomial multiplication operations, and alignment of the polynomials) may be communicated over a shared main bus. The polynomial multiplier circuitry 280 may reduce the total number of wires in the design at the expense of a degraded performance compared to the folded polynomial multiplier 260. Nonetheless, for large polynomial degrees with large polynomial multiplier kernels, the polynomial multiplier circuitry 280 may allow for an implementation on the integrated circuit device 12, whereas it may not be feasible to implement the folder polynomial multiplier 260 on the integrated circuit device 12 (e.g., depending on the size of, or resources available on, the integrated circuit device 12).

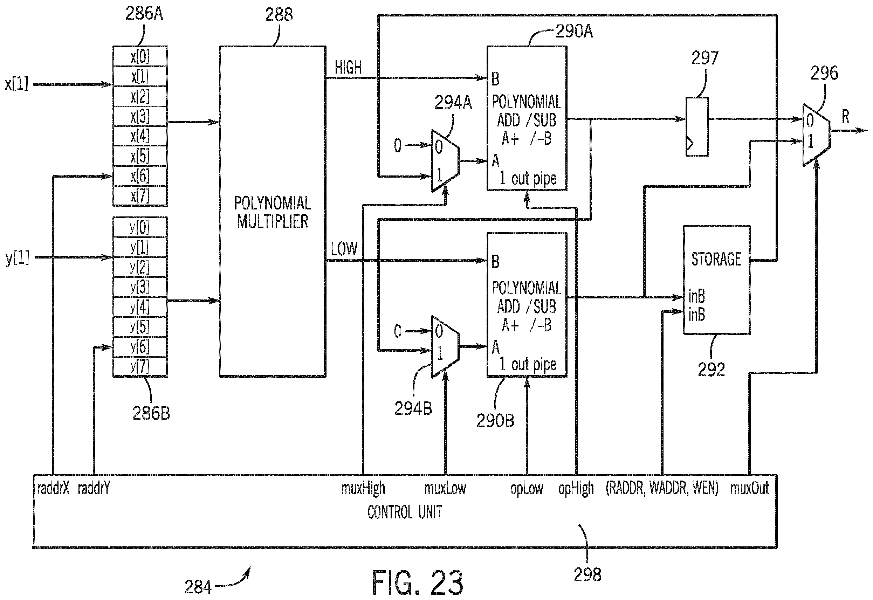

As another implementation, FIG. 23 illustrates a block diagram of polynomial multiplier circuitry 284 that may be used to perform polynomial multiplication. The polynomial multiplier circuitry 284 may be an embodiment of the multiplier circuitry 26 of FIG. 1. The polynomial multiplier circuitry 284 includes two buffers 286 (e.g., buffers 286A, 286B), a polynomial multiplier 288, polynomial adder/subtractors 290 (e.g., a first polynomial adder/subtractor 290A and a second polynomial adder/subtractor 290B), storage unit 292, multiplexers 294 (e.g., multiplexers 294A, 294B), multiplexer 296, register 297, and control unit 298.

As illustrated, a first input data line may feed inputs into the buffer 286A, and, similarly, a second input data line may feed inputs into the buffer 286B. The inputs, which may be fed in consecutive clock cycles, may include of successive sections (e.g., portions) of the input polynomial coefficients, depending on the radix that polynomial multiplier 288 operates on. For example, when circuitry 284 is designed to multiply degree 1023 polynomials, and should polynomial multiplier 288 operate on degree 127 polynomials, then the input polynomials Px and Py will each be split into eight degree 127 polynomials. The buffers 286 may store the 4096 bits of each degree 127 input polynomials at consecutive addresses. The polynomial multiplier 288 may receive the inputs from the buffer 286A and the buffer 286B, as directed by the control unit 289. For instance, in the illustrated embodiment, two polynomials may each be divided into eight portions (e.g., 128 bits of a 1024-bit polynomial) by the polynomial multiplier circuitry 284 (or other circuitry of the integrated circuit device 12 communicatively coupled to the polynomial multiplier circuitry 284). While the first buffer 286A and the second buffer 286B are shown as receiving inputs that have been divided into eight portions, in other embodiments, the inputs may be divided into any other suitable number of portions (e.g., two, three, four, five, six, seven, eight, nine, ten, eleven, twelve, fourteen, sixteen, eighteen, twenty, twenty-four, thirty-two, sixty-four portions). Additionally, each of the inputs (e.g., X and Y) may be any suitable size (e.g. precision) polynomial. For example, the inputs by may be n-bit polynomials, where $n$ is an integer between one and 32,768, inclusive. Furthermore, $n$ may be the number of coefficients included in each input (with each coefficient having a number of bits (e.g., eight, sixteen, thirty-two, sixty-four). Additionally, it should be noted though that because the polynomial multiplier circuitry 284 implements a recursive multiplication technique in which multiplication operations are performed using less precise values (e.g., values having fewer bits or coefficients) derived from higher precision values, the multiplier circuitry 284 may be implemented for performing multiplication between polynomials for which $n$ is an integer greater than zero. Accordingly, the portions derived from the inputs (e.g., x[0]-x[7] and y[0]-y[7]) may be any suitable precision. In other words, the portions derived from the inputs may each include $m$ bits or $m$ coefficients (that each have a number of bits), where $m$ is a positive integer that is less than $n$. Non-limiting examples of the value of $m$ include one, two, three, four, eight, sixteen, thirty-two, sixty-four, 128, 256, 512, 1024, 2048, and 4096 bits or coefficients.

The polynomial multiplier 288 may perform the polynomial multiplication operation on the inputs, similar to the polynomial multiplication 210. The polynomial multiplier 288 may be implemented using any multiplier circuitry discussed herein including another polynomial multiplier circuitry 284 included inside of the polynomial multiplier 288. For example, the polynomial multiplier 288 may be a polynomial multiplier that can perform multiplication operations involving values having $m$ bits. It should also be noted that while the polynomial multiplier 288 may be utilized to perform a first level of a recursive multiplication technique, the polynomial multiplier 288 itself may include polynomial multiplication circuitry (e.g., any multiplier circuitry discussed herein including, but not limited to, a version of the polynomial multiplier circuitry 284 that operates on lower precision (e.g., lower degree polynomial) inputs than the polynomial multiplier circuitry 284) used to implement one or more additional levels of recursion. For example, while the polynomial multiplier 288 is utilized to perform $m$-bit polynomial operations, the polynomial multiplier may perform these multiplication operations by subdividing the $m$-bit polynomials into lower precision values and using a relatively lower precision multiplier to multiply the lower precision values. However, the lower precision multiplier may perform multiplication by subdividing the lower precision values into even lower precision values and multiplying the even lower precision values using an even lower precision multiplier (and so on). This continuing pattern of subdividing values into fewer bit terms and using lower and lower precision multipliers may be performed any suitable number of times. Thus, the multiplier circuitry 288 may include several other polynomial multipliers used to implement any suitable levels of recursion such that each polynomial multiplier (or polynomial multiplication circuitry) included in the polynomial multiplier 288 may be configurable to perform multiplication involving lower and lower precision values than another multiplier included in the polynomial multiplier 288.

The polynomial multiplier 288 may output a high component of a product (e.g., a subproduct of a polynomial product being calculated) and a low component of the product. In the aforementioned example in which the polynomial multiplier 288 operates on degree 127 polynomials, the high and low parts of the output will both be degree 127 polynomials. The polynomial multiplier 288 may transmit the high component (e.g., the upper half) to the first polynomial adder/subtractor 290A and the low component (e.g., a lower half) to a second polynomial adder/subtractor 290B. The second polynomial adder/subtractor 290B may receive an output of the first polynomial adder/subtractor 290A (or a zero value as determined by the multiplexer 294B, which may be controlled by the "muxLow" signal from the control unit 298) and the low component of the product, perform an addition or subtraction operation (e.g., as indicated by the "opLow" signal from the control unit 298), and output a result to a storage unit 292. The storage unit 292 may transmit the result to the multiplexer 294A connected to the first adder/subtractor 290A. The first adder/subtractor 290A may compute a result using the high component and the output of the multiplexer 294A (which may be controlled by the "muxHigh" signal from the control unit 298), which is either a zero value or the result provided from the storage unit 292. The first adder/subtractor 290A may transmit a result to a register 297 and to a multiplexer 294B. The register 297 may supply the result to an output multiplexer 296. The second adder/subtractor 290B may compute a result using a subsequent low component from the polynomial multiplier 288 and the output of multiplexer 294B, which selects either the output of polynomial adder/subtractor 290A or zero as an output. The second adder/subtractor 290B may supply the result to the storage 292 and the output multiplexer 296.

The polynomial multiplier circuitry 284 may perform polynomial multiplication and reduction operations simultaneously. When polynomial inputs are split into K sub-polynomials, the polynomial multiplier circuitry 284 will also return K sub-polynomials, which make up for the full result. Each of the K result sub-polynomials will depend on sub-product contributions which overlap with its weight. Moreover, as previously mentioned in Equation 13, the modular reduction implies that some sub-product contributions will carry a negative sign. Due to the architecture of the polynomial multiplier circuitry 284, the polynomial reduction may be scheduled to execute at the same time as the polynomial multiplication. Rather than a standard right-to-left column by column approach, the set of sub-products are produced such that the high output of the previous sub-product (output 288 HIGH) overlaps over the low output (288 LOW) of the current sub-product. One schedule that meets this requirement can be obtained if the sub-products are approached as a rectangle and the rectangle is traversed from top-right towards bottom-left and repeat in a modulo fashion.

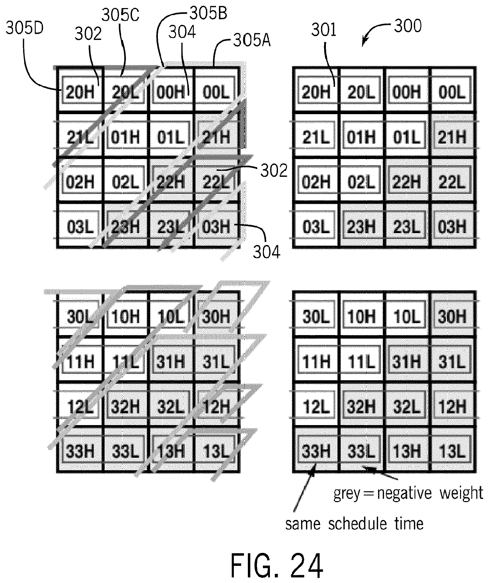

With the foregoing in mind, FIG. 24 illustrates an example schedule 300 for scheduling reduction simultaneously with polynomial multiplication. A set 301 of high and low entries correspond to the polynomial subproduct indexes (multiplicand and multiplier), and "H" and "L" to the upper and lower halves of the polynomial outputs from the polynomial multiplier 288, for instance, when performing a multiplication operation in which each input (e.g., polynomial x and polynomial y) is split into four portions (e.g., to generate x[0]-x[3] and y[0]-y[3]. Each half of the output may be referred to as a subproduct or a half (e.g., upper half or lower half) of a subproduct. It should be noted that the degree of the output is about twice of the degree of each of the inputs. Thus, each halve of the output (e.g., the upper half or lower half) has the same degree as, or a similar degree (e.g., within several bits) to, each input (e.g., x[0]-x[3]). Additionally, subproduct halves which have a weight larger than three (as in the current example) will wrap around the right of the rectangle and contribute with a negative sign. These negative sign contributions are denoted by the grayed boxes shown in FIG. 24.

By way of example, each column in the schedule 300 may be combined (via addition and subtraction operations) a column accumulator 305. That is, each column may accumulate values in the entire column using the storage unit 292 of FIG. 23. Starting with a first diagonal 304, the subproduct [0, 0] is generated by 288. The low part of this subproduct, 00L, is passed through add/subtract unit 290B by adding zero to it (e.g., by multiplexer 294B selecting 0), and loaded in a first column accumulator 305A which is stored in storage 292. Similarly, 00H (the high part of the subproduct) is generated and passed through adder/subtractor unit 290A by adding zero to it (multiplexer 294A selecting 0). At the next cycle, sub-product [0,1] is generated by the polynomial multiplier 288. The output of the first adder/subtractor 290A 00H will then be directed to multiplexer 294B (which selects it on data line 1) and added to 01L (the value directly below 00H in the schedule 300). The sum returned by the second adder/subtractor 290B is loaded into a second column accumulator 305B stored in the storage unit 292. The value accompanying OIL, 01H, is added with the value directly below it (02L) and the sum is loaded into a third column accumulator 305C. The value accompanying 02L, 02H, is added with the value directly below it (03L) and the sum is loaded into a fourth column accumulator 305C.

Upon reaching the fourth column of the schedule 300, the value accompanying 03L, 03H (located is in the first column and has a negative weight) is added to the values in the first column accumulator 305A. Referring briefly back to FIG. 23, this may be done by sending the 00L value from the storage unit 292 to the first adder/subtractor 290A, which will be combined (e.g., using addition or subtraction (subtraction in this particular example due to 03H being a negative weight as indicated in FIG. 24)) with the 03H subproduct generated by the polynomial multiplier 288. The generated value may then be provided to the second adder/subtractor 290B, where the generated value will either be combined with another subproduct generated by the polynomial multiplier or a zero (as decided by the multiplexer 294B based on control signals received from the control unit 298). The output of the second adder/subtractor 290B may then be sent to the storage unit 292, and this process may repeat over and over again for each column being accumulated until the product (or a portion thereof) is ready to be output (e.g., fully accumulated).

Thus, the values of each column accumulator 305 are stored in the storage unit 292. Every time an operation occurs using a value stored in the storage unit 292, the value is sent to the first polynomial adder 290A and the sum of the operation performed by the first polynomial adder 290A is routed to the second polynomial adder 290B. Once the first diagonal 304 has been passed through, the next value to be operated on may have a similar alignment to the first set of value in the first diagonal 304 (e.g., 00L and 00H). That is, the next value to be accumulated is found in a second diagonal 302, where 22L (which has a negative weight) is accumulated (added) with the values in the first column accumulator 305A. The accompany value, 22H (which has a negative weight) is accumulated with the values in second column accumulator 305B. The value located directly below 22H, 23L, is similarly accumulated with the values in the second column accumulator 305B.

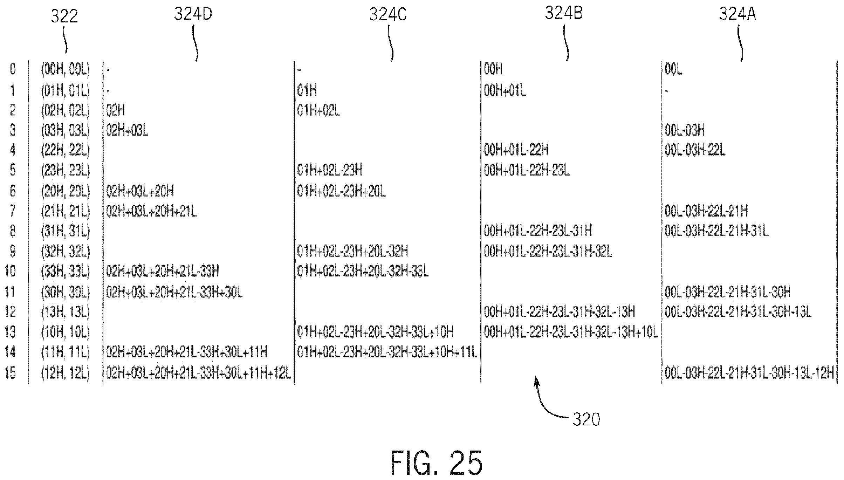

A similar process as the one described above may occur throughout the schedule 300 until the polynomial multiplication and reduction operation is complete. An enumerated schedule 320 is illustrated in FIG. 25. The enumerated schedule 320 includes a list of the pairs of values 322, an operation schedule 324A for the first column accumulator 305A, an operation schedule 324B for the second column accumulator 305B, an operation schedule 324C for the third column accumulator 305C, and an operation schedule 324D for fourth column accumulator 305D. Each row corresponds to the values currently accumulated in each column accumulator 305.

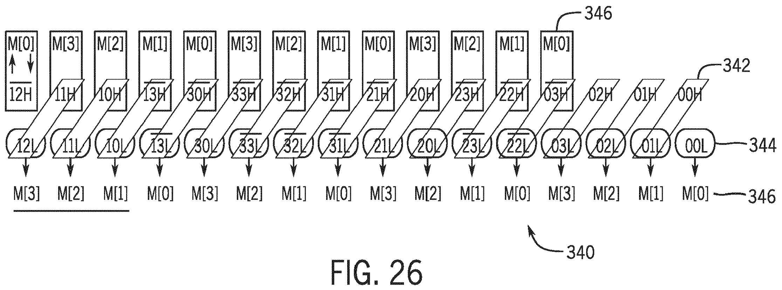

Furthermore, FIG. 26 illustrates a modulo dataflow 340 for the schedule 300. A high value 342 and a low value 344 are each generated by the polynomial multiplier 288. The low value 344 is loaded into its respective column accumulator (305A), while the high value 00H will be added with 01L during the next cycle, and their result be written into column accumulator 305B. The value from the operation performed in each accumulation in stored in a column accumulator storage (M[N]) 346. The modulo dataflow 340 illustrates the flow of data into the column accumulators 305 as described above with respect to FIG. 24. By way of example, the value stored in the column accumulator storage 346 is added to the high value 342 below it. The result from the previous operation is accumulated with the low value 344 diagonal from the high value 342. The result from the previous operation is stored in the same column accumulator storage 346.

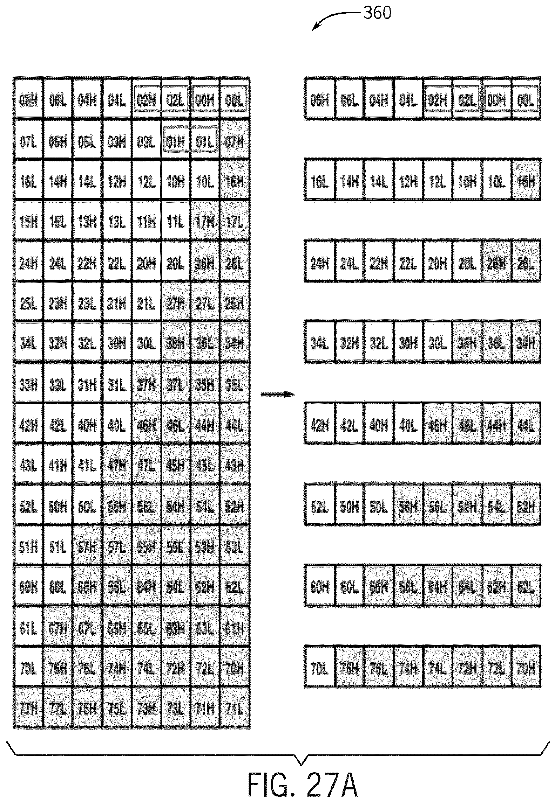

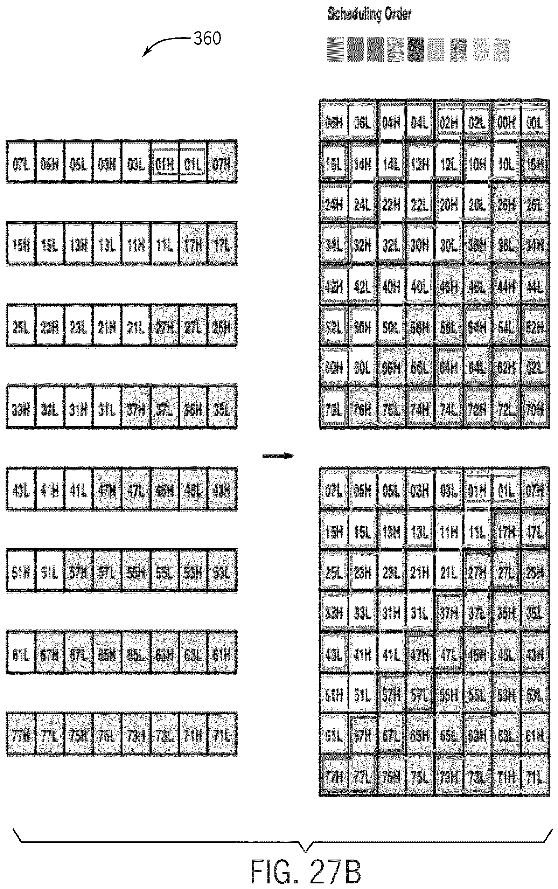

As discussed above, a 1024 polynomial multiplication and reduction is a proposed implementation of the current embodiments (though, as also discussed above, other degree polynomial multiplication may also be performed using the techniques described herein). With the foregoing in mind, FIG. 27A and FIG. 27B illustrate a schedule 360 for the 1024 element polynomial in which the sub-polynomial element count is 128, which corresponds to each input being split in eight sub-polynomials. The polynomial multiplication and reduction operation using the schedule 360 may follow a similar data flow of the schedule 300, where the schedule 360 may include eight column accumulators 305. A similar data from through each diagonal, where the high value and the low value directly below the high value are operated on the accumulation into a respective column accumulator 305. In other words, the schedule 360 may be utilized to perform the multiplication operation illustrated in FIG. 24.

Executing polynomial multiplication operations on polynomials of increasing size (e.g., an increase in coefficients) may increase the complexity, the power consumption, and/or the resource consumption needed to execute the polynomial multiplication operation. This may be due to the complex operations occurring within a processing pipeline, including reading and writing to memory.

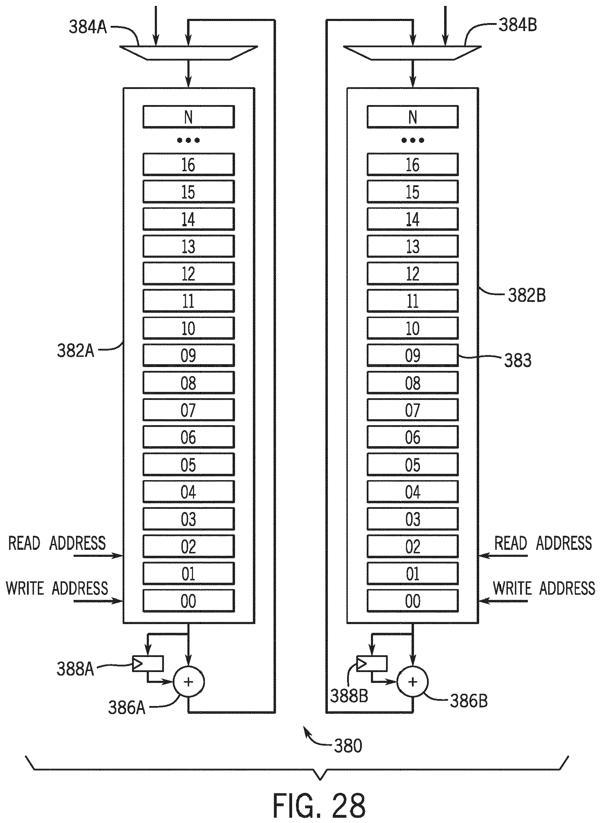

By redesigning the processing pipeline and the hardware surrounding and/or interacting with the pipeline, a scalable, regular, and robust solution may be used to perform the polynomial multiplication operations. The redesigned processing pipeline may directly couple processing units (in soft logic and/or DSP Blocks) to memory. With the foregoing in mind, FIG. 28 illustrates an example processing pipeline 380 for performing polynomial multiplication. The processing pipeline may directly couple processing units (in soft logic and/or DSP Blocks) to memory.

The processing pipeline 380 may include a first memory unit 382A and a second memory unit 382B. The first memory unit 382A may receive inputs via a multiplexer 384A, and the second memory unit 382B may receive inputs via a multiplexer 384B. The memory units 382 may store the coefficients, intermediate products/results, and/or data related to the polynomial multiplication operation in memory slots 383 (e.g., a register). The first memory unit 382A and second memory unit 382B may each be coupled to a first adder 386A and a second adder 386B, respectively. Additionally, the first memory unit 382A and second memory unit 382B may each be coupled to a register 388A and 388B, respectively. In the processing pipeline 380, one element may be processed per clock cycle. If there are two polynomials (e.g., polynomial A and polynomial B), the two polynomials may be processed independently (during the expansion stage).

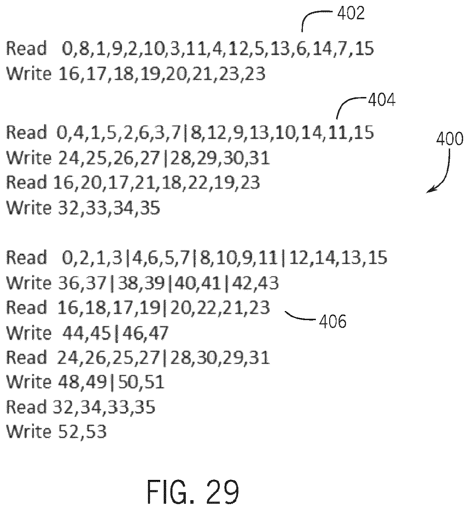

To properly process the polynomials independently, the processing pipeline 380 may use an addressing sequence. With the foregoing in mind, FIG. 29 illustrates an addressing sequence 400. There are three passes: a first pass 402, a second pass 404, and a third pass 406. This leaves coefficient sequences of two. The length of a sequence may be referred to as a radix. The radix may be processed in the next step either sequentially (e.g., reading out individual sequence elements) or in parallel (e.g., reading out all elements in a sequence in a single clock). For the processing pipeline 380 of FIG. 28, each element is read out one at a time. The upper (e.g., high) and lower (e.g., low) coefficient indexes are added together, and this process is repeated recursively to obtain a sequence that is the length of the radix. The smallest radix may be one. The radix of two may use four multiplication operations in the pedantic case, but this can be reduced to three multiplies when a polynomial length two multiplier is implemented using the K-O algorithm decomposition described above. In some embodiments, larger radixes, such as eight or sixteen or even 256, may be implemented using the K-O algorithm decomposition.

After each pass, the terms are expanding. That is, the number of terms may increase, for example, by 50% per level. The first pas 402 may include 24 values. The second pass 403 may include 36 values, and the third level may include 54 values. The values are each paired into degree-1 polynomials, which in turn each need four multiplication operations (or three multiplication operations in the case of the degree-1 multiplier core implemented using a K-O algorithm decomposition). There are 27 of these degree-1 polynomials, which corresponds to 81 individual multiplications when the radix 2 multiplications use the K-O algorithm decomposition. In some embodiments, the address sequencing above may be extended to higher degrees. Mixed degree decompositions may also be used. By way of example, a degree-1 decomposition may be used for the expansion to the radix of the multiplier, and another decomposition may be used inside the multiplier.

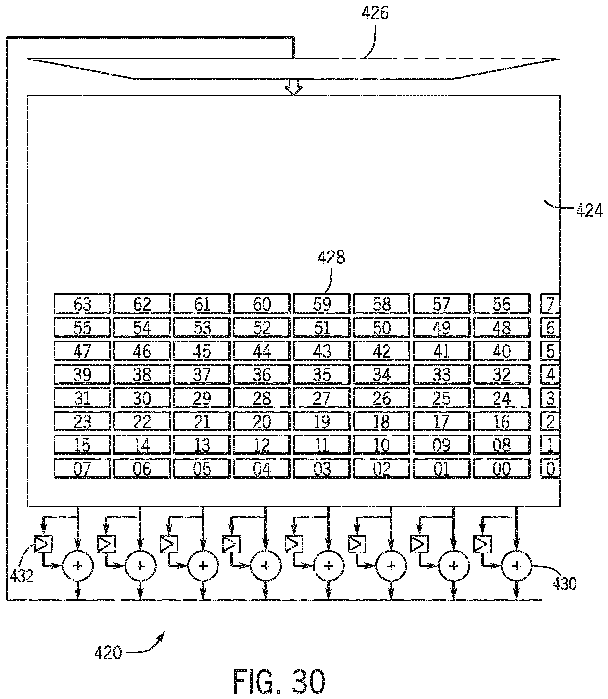

As discussed above, the radix for a polynomial in the polynomial multiplication operation may be processed in parallel. For example, FIG. 30 illustrates an example processing pipeline 420 for performing polynomial multiplication in parallel. The processing pipeline 420 may directly couple processing units (in soft logic and/or DSP Blocks) to memory.

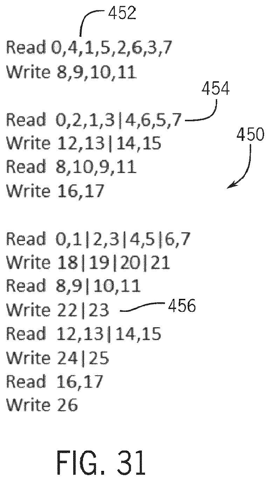

The processing pipeline 420 may include a memory unit 424 with one or more memory slots 428 (e.g., registers). The processing pipeline 420 may receive data via a multiplexer 426. Each memory slot may correspond to a coefficient, result/product, and/or any data related to the polynomial. The memory unit 424 may be coupled to one or more adders 430 and one or more registers 432. The processing pipeline 420 may constructed to decompose a 64 element polynomial into degree-7 polynomials. An addressing sequence 450 for this decomposition is illustrated in FIG. 31. As illustrated, the addressing sequence 450 includes a first stage 452, a second state 454, and a third stage 456. The first stage 452 may create a degree-31 polynomial, the second stage 454 may create a degree-15 polynomial and the third stage 456 may create a degree-7 polynomial. This is accomplished in twelve clock cycles (four clock cycles per stage), while eight pairs of polynomials are processed in parallel. As such, it should be observed that the parallelism of the decomposition and the radix do not have to be the same. The processing pipeline 380 of FIG. 28 may also generate radix 8 polynomials, however the multiplication stage would need multiple reads and writes to execute. The loading and unloading of the memories are not shown, other than indicated by the multiplexers 384 and 425 on the input path.

Once the expansion stage is completed, the multiplications may be done at the chosen radix. In particular, elements (whether individual or in polynomial form) are multiplied with elements of the same index. The amount of memory (number of locations) may be very small compared to the other resources, such as number of memory blocks, amount of soft logic units, and/or the number of multipliers (DSP Blocks). By way of example, for a 1024 element vector, with a radix of 64, 64 memory slots may be used based on the radix and a depth of sixteen memory slots to store the polynomial. For four passes for decomposition, 81 elements per block may be used.

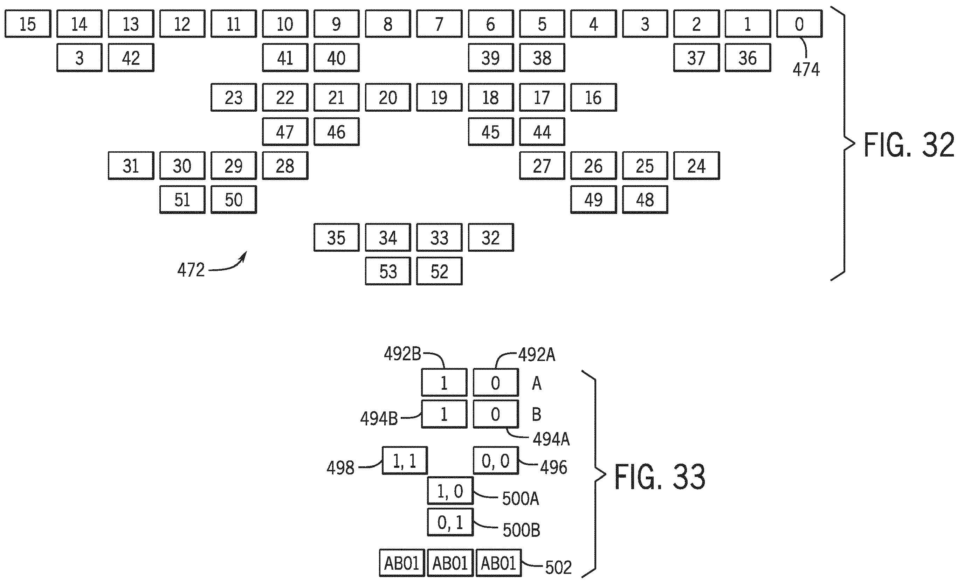

Although an in-place multiplier storage may be used (replacing the expanded polynomial with the multiplier results), it may be much simpler to store the multiplication results in new locations. Once all the multiplications are completed, the polynomial elements may be summed up. To execute these operations, the alignment (e.g., rank) of the polynomial elements may be chosen. With the foregoing in mind, FIG. 32 shows an alignment 472 of column ordering of one or more elements 474 of the decomposition completed in FIG. 31.

After the polynomial is operated on via a multiplication operation (e.g., using any multiplication circuitry discussed herein), the degree of the polynomial increases. For instance, the multiplication of two degree-1 polynomials results in a degree-2 polynomial, as illustrated by FIG. 33. A pedantic expansion 490 may include a first polynomial with elements 492A and 492B and a second polynomial with elements 494A and 494B. To multiply these polynomials together, four multiplications between the elements 492 and 494 may be used. However, using the K-O algorithm application of polynomial multiplication, three multiplication operations may be used and one or more addition operations. By forming pairs between the elements of the polynomials, where a first pair 496 is formed between the elements 492A and 494A, a second pair 498 is formed between the elements 492B and 494B, a third pair 500A between the elements 492B and 494A, and a fourth pair 500B between the elements 492A and 494B. The first pair 496 may be multiplied together and stored as a first component of the product 502, and the second pair 498 may be multiplied together and stored as a second component of the product 502. The third pair 500A and the fourth pair 500B may be added together and the resulting pair may be multiplied together to be stored as a third component of the product 502.

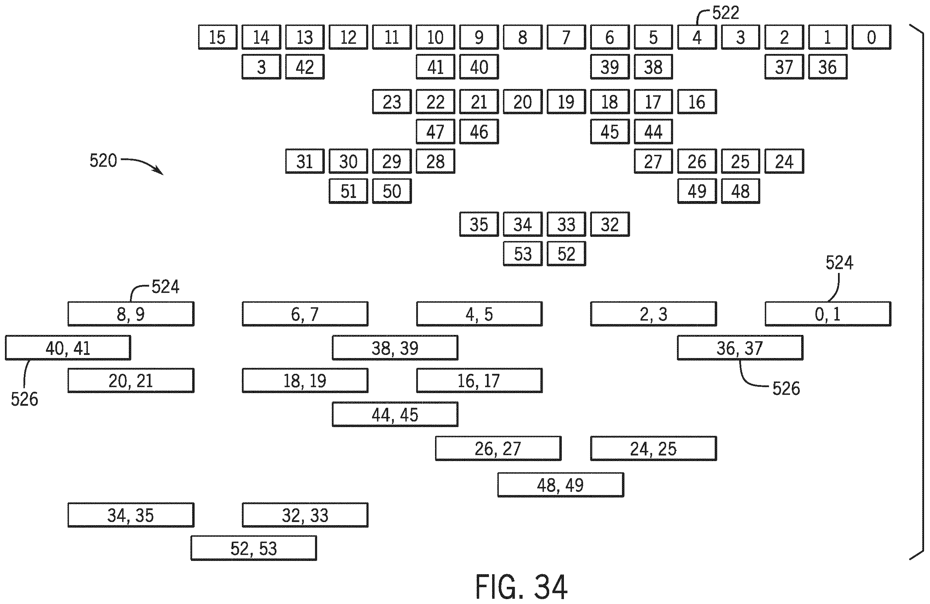

By way of example, two degree-7 polynomials would result in a degree-14 polynomial (e.g., a value with 15 coefficients). FIG. 34 illustrates an example 520 of the multiplication of two degree-7 polynomials in which approximately half of the results (the lesser significant ones) are shown. The index in the polynomials (for example (36,37)) refers to the multiplication of the degree-1 polynomial {B37,B36} with the degree-1 polynomial {A37,A36}.

FIG. 34 may illustrate an alignment 522 of the two degree-7 polynomials. The multiplication to generate a first product 524 and a second product 526 is described below. To generate the first product 524, the elements "0" and "1" in the alignment 522 are multiplied together. To generate the second product 526, the elements "36" and "37" are multiplied together. Since the element "36" is disposed underneath the element "1" and the element "37" is disposed underneath the element "2," the second product 526 may be located at a position shifted two elements over from the first product 526. This is because the element "36" is starting at position in the alignment 522 that is shifted one element down from the beginning of the element sequences. The same thinking may be applied to the element "37." Since each element "36" and "37" is shifted one element down, the second product 526 is shifted two elements over from the first product 526.

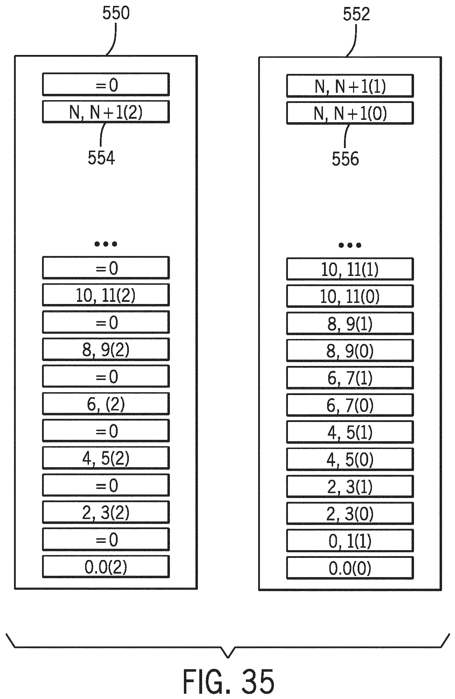

Once the multiplication of two polynomials is completed, the values may need to be stored. With the foregoing in mind, FIG. 35 illustrates the storage of results from polynomial multiplication. A first memory unit 550 and a second memory unit 552 may be used to store the results. If two element pairs are read and multiplied, three elements are written back. If two cycles are taken to read a value, three cycles to write may be used. Alternately, three elements may be written back to the first memory unit 550 and the second memory unit 552, splitting the values between the first memory unit 550 and the second memory unit 552. In one example, two elements 556 are written to the second memory unit 552 (in two cycles) and one element 554 to the first memory unit 550, along with a zero extension. The numbering on the memory locations may be defined as: <least significant element>,<most significant element>,<result element index>. In FIG. 35, the result element indexes are 0, 1, and 2.

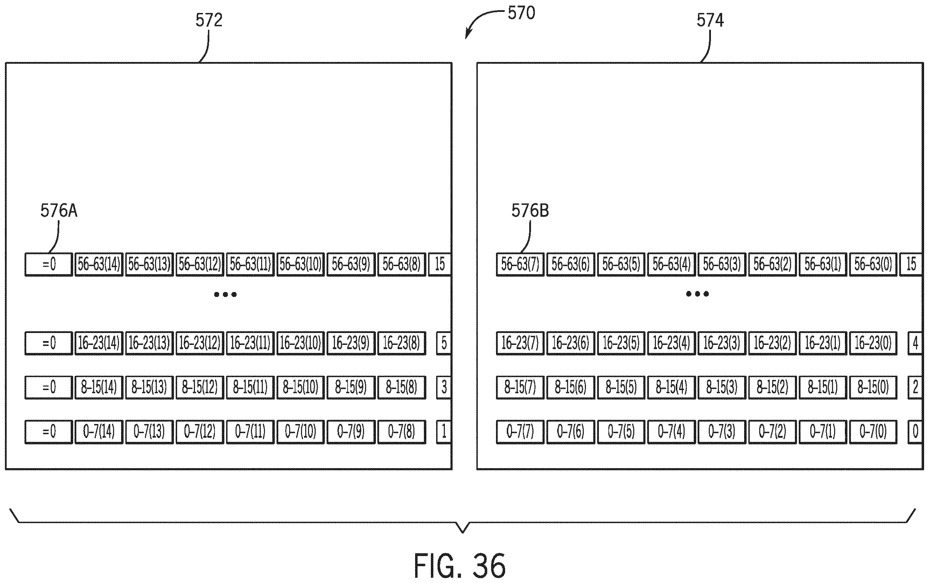

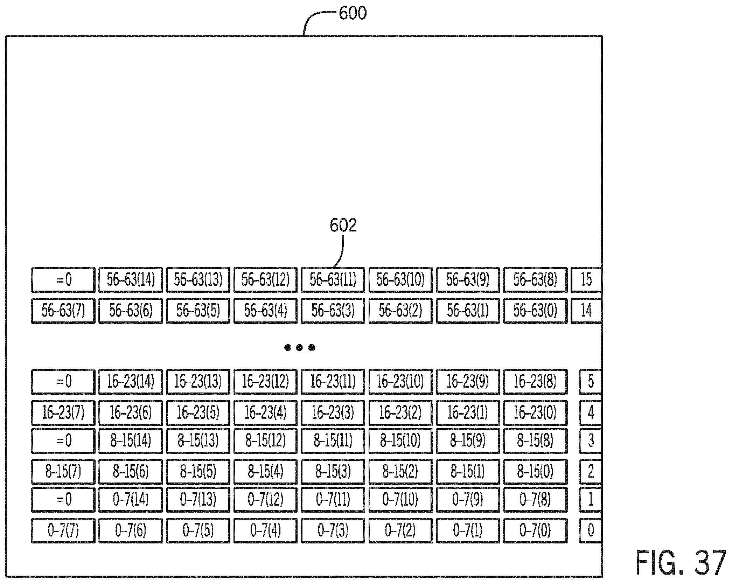

A similar approach may also be applied to cases with a higher radix. For example, FIG. 36 illustrates the storage of results from polynomial multiplication with segments with the high radix value. If a first radix 8 polynomial segment (a degree-7 polynomial) is read from a first memory unit 574 and a second radix 8 polynomial segment from a second memory unit 572, then the result may be 15 elements. The lower 8 elements 576B may be written into the first memory unit 574, and the upper 7 elements 576A in the second memory unit 572 (with one zero value). Furthermore, illustrated in FIG. 37, when both polynomials are stored in a single memory unit 600 (or the multiplier core is multi-cycle), the two output halves 602 may be written into the single memory unit 600.

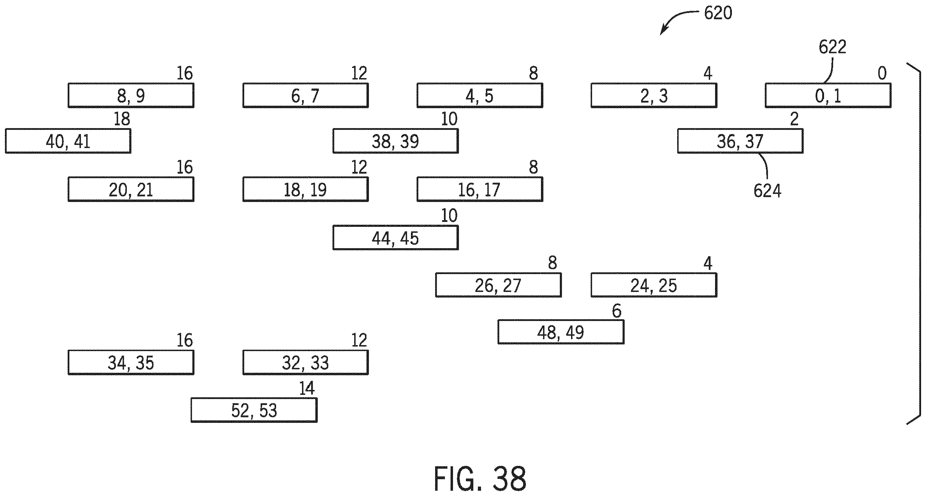

The segments from the polynomial multiplication may now be added back together. Each segment may have an offset from zero in terms of radix widths. Due to the proposed polynomial multiplication operation decomposing everything into a radix size, the offset may be a modulo 2 distance from zero. This is very useful because if the single or double memory are used as multiplier storage, aligning the values may be relatively simple. With the foregoing in mind, FIG. 38 is an alignment 620 for adding the segments together. Due to each segment having an offset of a modulo 2, a first segment 622 is offset from a second segment 624 by 2 elements. This is shown with the small number to the top-right of each segment. As such, the alignment 620 may be arranged to compensate for the modulo 2 offset. Once the alignment 620 is known, the current value at the particular alignment index (represented in FIG. 38 by the values to the top-right of each segment) may be read, and the current multiplier segment value is added to the current value.

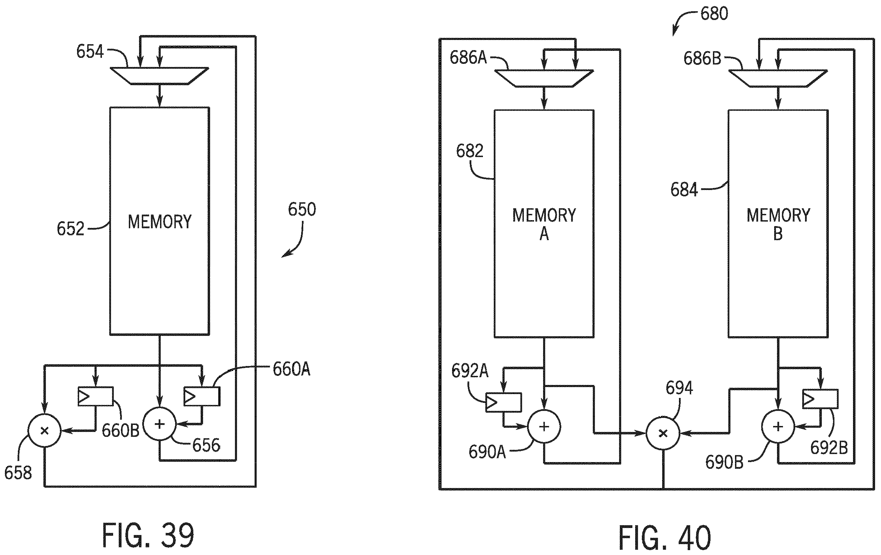

There are multiple embodiments to implement the process described in FIGS. 28-38. In a first embodiment, FIG. 39 illustrates a single memory expansion and multiplication circuit 650. A single memory 652 may be used to store both polynomials to be multiplied. For the expansion operations, one of the elements may be loaded into a register 660A, and the other element is added to it via an adder 656 and written to the destination location in the single memory 652. After all of the expansions are performed for both polynomials, the multiplication operations may be performed via the register 660B and the multiplier 658.

When the radix is one, a single multiplication operation may be performed for each expanded value. When the radix is more than one, then multiple loads and multiple multiplication operations may be performed. In the case of the radix being two, four multiplication operations may be performed. The four multiplication operations may take less than 8 clock cycles, as some of the stages values may be reused. By way of example, in a first cycle, a first value from a first polynomial may be loaded into the register 660B. In a second cycle, a first value from a second polynomial may be multiplied with the value stored in the register 660B and the product is stored in the single memory unit 652. In a third cycle, a second value from the second polynomial may be multiplied with the value stored in the register 660B and the product is stored in the single memory unit 652. In a fourth cycle, a second value from a first polynomial may be loaded into the register 660B. In a fifth cycle, the first value from the second polynomial may be multiplied with the value stored in the register 660B and the product is stored in the single memory unit 652. In a sixth cycle, a second value from the second polynomial may be multiplied with the value stored in the register 660B and the product is stored in the single memory unit 652.

Alternately, a higher radix multiplier may be provided. Here, all four values may be loaded and then multiplied as described above. Loading the values may be done over four clock cycles and writing the results (including the zero extension) into the single memory 652. In some embodiments, the reading and writing operations may be executed simultaneously.

In a second embodiment, FIG. 40 illustrates a dual memory expansion and multiplication circuit 680. The dual memory expansion and multiplication circuit 680 may include a first memory unit 682 that receives values via a multiplexer 686A and a second memory unit 684 that receives values via a multiplexer 686B. The first memory unit 682 may be coupled to an adder 690A and a register 692A, and the second memory unit 684 may be coupled to an adder 690B and a register 692B. The first memory unit 682 and the second memory unit 684 may each be coupled to a multiplier 694. The first polynomial may be stored in the first memory unit 682 and the second polynomial may be stored in the second memory unit 684.

The expansion stage may be calculated for both polynomials independently, where the first memory unit 682 may use the adder 690A and the register 692A and the second memory unit 684 may use the adder 690B and the register 692B to complete the expansion stage. The multiplication stage may be calculated in one clock cycle per radix multiply.

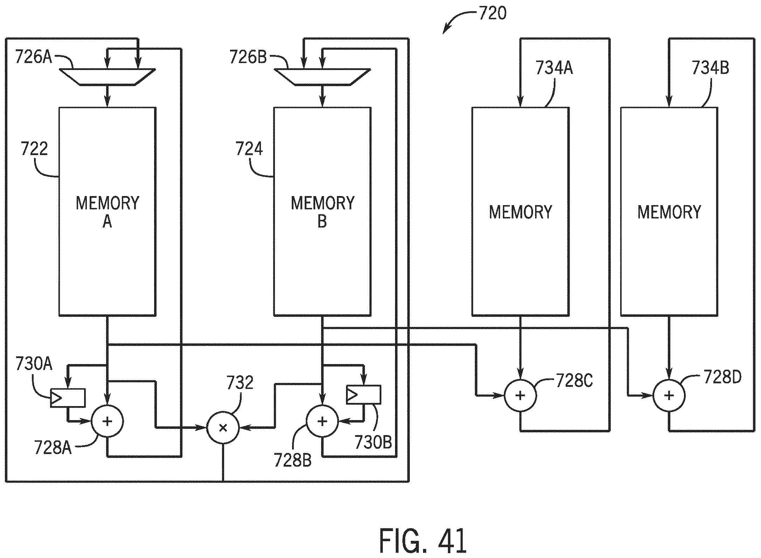

In a third embodiment, FIG. 41 illustrates a dual memory expansion and multiplication with double memory summation circuit 720. The dual memory expansion and multiplication with double memory summation circuit 720 may include a first memory unit 722 that receives values via a multiplexer 726A and a second memory unit 724 that receives values via a multiplexer 726B. The first memory unit 722 may be coupled to an adder 728A and a register 730A, and the second memory unit 724 may be coupled to an adder 782B and a register 730B. The first memory unit 722 and the second memory unit 724 may each be coupled to a multiplier 732. The first memory unit 722 may be coupled to an adder 728C, where the output of the adder 728C is fed into a summation memory unit 734A. The second memory unit 724 may be coupled to an adder 728D, where the output of the adder 728D is fed into a summation memory unit 734B.

The summation memory units 734 may store a running summation of the segments stored in the first memory unit 722 and the second memory unit 724 during the expansion stage. That is, on an index by index basis, a segment (containing 2*radix-1 elements) may be read from the first memory unit 722 and the second memory unit 724, and at the same time, read out the value of the current running total for that index from the summation memory units 734. Each vector may be added together and write back to the summation memory units 734.

Several different approaches to control the circuitry described with respect to FIGS. 39-41. Two of these approaches are described herein. Each of these approaches may be used in combination, where one approach is used for one stage of the polynomial expansion and reduction operation and the other approached is used for another stage of the same operation. The two approaches may be referred to as Pre-Calculated and Counter Based.

**Pre-Calculated**

Based on the addressing sequence 400 in FIG. 29, the expansion stage sequences for one polynomial multiplication operation are known. It should be noted that the sequencing for the multiplication stage is trivial. Similar to the expansion stage, the sequence numbers for the summation stage may be calculated. The instruction ROM for these will be relatively small compared to the RAMs containing the data. With a relatively large sequence, for example a case of a degree-1023 polynomial with a radix 64 multiplier, the size of the memory in negligible. The expansion stage may use four passes. The first pass may have 32 read operations (and write operations), the second pass may have 48 read operations (and write operations), the third pass may have 72 read operations (and write operations), and the fourth pass may have 108 read operations (and write operations). That is, there are 260 total instructions (read and write address operations may be in the same instruction). The multiplication stage operates on 108 locations - as these are purely linear, this is where a mixed mode method may be implemented, with a simple counter replacing the instructions in memory. The 108 results may then be summed together.

**Counter Based**

The expansion stage may be implemented with a number of counters, similar to the control of fast Fourier transforms (FFTs). Each pass of the expansion stage is 50% larger than the previous one. The stop comparison of the counter may be implemented by incrementing the stop count register by half of its current value every time an end of a pass occurs. This may also increment the output multiplexer control of the read counter. The inputs to the multiplexers are different rotations of the main pass counter.

By way of example, for a degree-15 polynomial (see FIG. 29), the first pass read values are: 0, 8, 1, 9, etc. The [3:0] counter rotation for this is [0,3,2,1]. The next pass read values are 0, 4, 1, 5, 2, etc. The [3:0] counter rotation for this pass is [1,0,3,2]. The counter is longer because of the increasing length of each pass, and due to the new values from the previous pass that may also be processed. The code for the expansion portion counter is shown below:

```
prc_main: PROCESS (sysclk,reset,enable)
    BEGIN
    IF (reset = '1') THEN
    countff <= "00000000";
     lastcountff <= "00010000";
   passff <= "001";
   wraddff <= "010000";
    ELSIF (rising_edge(sysclk)) THEN
      IF (enable = '1') THEN
      IF (end_pass = '1') THEN
       countff <= "00000000";
      ELSE
       countff <= countff + 1;
      END IF;
      IF (end_pass = '1') THEN
```

```
lastcountff <= lastcountff + ('0' & lastcountff(8 DOWNTO 2));
END IF;
IF (end_pass = '1') THEN
  passff(3) <= passff(2);
  passff(2) <= passff(1);
  passff(1) <= '0';
END IF;
wren_oneff <= (passff(1) OR passff(2) OR passff(3)) AND countff(1);
wren_twoff <= wren_oneff;
wren_thrff <= wren_twoff;
wren_forff <= wren_thrff;
IF (wren_forff = '1') THEN
  wraddff <= wraddff + 1;
END IF;
END IF;
END IF;
END PROCESS;
prc_chk: PROCESS (countff,lastcountff)
BEGIN
IF (countff = (lastcountff-1)) THEN
  end_pass <= '1';
ELSE
  end_pass <= '0';
END IF;
END PROCESS;
readaddnode(1)(6 DOWNTO 1) <= countff(6 DOWNTO 5) & countff(1) & countff(4 DOWNTO 2);
readaddnode(2)(6 DOWNTO 1) <= countff(6 DOWNTO 5) & countff(2 DOWNTO 1) & countff(4 DOWNTO 3);
readaddnode(3)(6 DOWNTO 1) <= countff(6 DOWNTO 5) & countff(3 DOWNTO 1) & countff(4);
gen_mux_one: FOR k IN 1 TO 6 GENERATE
  readaddmux(1)(k) <= readaddnode(1)(k) AND passff(1);
END GENERATE;
gen_mux_two: FOR j IN 2 TO 3 GENERATE
  gen_mux_thr: FOR k IN 1 TO 6 GENERATE
    readaddmux(j)(k) <= (readaddnode(j)(k) AND passff(j)) OR readaddmux(j-1)(k);
  END GENERATE;
END GENERATE;
read_add <= readaddmux(3)(6 DOWNTO 1);
write_add <= wraddff(6 DOWNTO 1);
write_en <= wren_forff;
```

The address generation for the summation may be relatively more involved, and, thus, may be better implemented using the pre-calculated approach. The address generation for the multiplication operation is trivial.

A third approach, referred to as "Calculated," may only apply to the summation stage. The expansion addressing is previously calculated in the counter method, and the multiplication addressing is trivial. From FIGS. 29 and 31, it should be observed that there is a regular pattern to the addressing and offsets. These values may be more easily calculated during the various passes of the expansion, rather than the more complex implementation of a single address calculation during the summation stage. These calculated addressing may then be stored in a memory, which may be addressed sequentially in the summation phase to provide the write addressing.

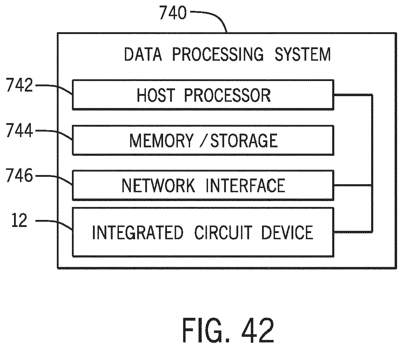

In addition to the multiplication operations discussed above (e.g., polynomial multiplication operations), the integrated circuit device 12 may be a data processing system or a component included in a data processing system. For example, the integrated circuit device 12 may be a component of a data processing system 740, shown in FIG. 42.

The data processing system 740 may include a host processor 742 (e.g., a central-processing unit (CPU)), memory and/or storage circuitry 744, and a network interface 746. The data processing system 740 may include more or fewer components (e.g., electronic display, user interface structures, application specific integrated circuits (ASICs)). The host processor 742 may include any suitable processor, such as an INTEL® Xeon® processor or a reduced-instruction processor (e.g., a reduced instruction set computer (RISC), an Advanced RISC Machine (ARM) processor) that may manage a data processing request for the data processing system 740 (e.g., to perform encryption, decryption, machine learning, video processing, voice recognition, image recognition, data compression, database search ranking, bioinformatics, network security pattern identification, spatial navigation, or the like). The memory and/or storage circuitry 744 may include random access memory (RAM), read-only memory (ROM), one or more hard drives, flash memory, or the like. The memory and/or storage circuitry 744 may hold data to be processed by the data processing system 740. In some cases, the memory and/or storage circuitry 744 may also store configuration programs (bitstreams) for programming the integrated circuit device 12. The network interface 746 may allow the data processing system 740 to communicate with other electronic devices. The data processing system 740 may include several different packages or may be contained within a single package on a single package substrate. For example, components of the data processing system 740 may be located on several different packages at one location (e.g., a data center) or multiple locations. For instance, components of the data processing system 740 may be located in separate geographic locations or areas, such as cities, states, or countries.

In one example, the data processing system 740 may be part of a data center that processes a variety of different requests. For instance, the data processing system 740 may receive a data processing request via the network interface 746 to perform encryption, decryption, machine learning, video processing, voice recognition, image recognition, data compression, database search ranking, bioinformatics, network security pattern identification, spatial navigation, digital signal processing, or some other specialized task.

Furthermore, in some embodiments, the multiplier circuitry 26 and data processing system 740 may be virtualized. That is, one or more virtual machines may be used to implement a software-based representation of the multiplier circuitry 26 and data processing system 740 that emulates the functionalities of the multiplier circuitry 26 and data processing system 740 described herein. For example, a system (e.g., that includes one or more computing devices) may include a hypervisor that manages resources associated with one or more virtual machines and may allocate one or more virtual machines that emulate the multiplier circuitry 26 or data processing system 740 to perform multiplication operations and other operations described herein.

Accordingly, the techniques described herein enable particular applications to be carried using multiplier circuitry 26 included on the integrated circuit device 12. For example, the multiplier circuitry 26 enables the integrated circuit device 12 to perform relatively large polynomial multiplication operations with reduced latency, thereby enhancing the ability of integrated circuit devices, such as programmable logic devices (e.g., FPGAs), to be used for performing multiplication operations that may be used in applications such as encryption.

While the embodiments set forth in the present disclosure may be susceptible to various modifications and alternative forms, specific embodiments have been shown by way of example in the drawings and have been described in detail herein. However, the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible, or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

**Example Embodiments of the Disclosure**

The following numbered clauses define certain example embodiments of the present disclosure.

CLAUSE 1.

Multiplier circuitry comprising:
a multiplier configurable to generate a plurality of subproducts by performing a plurality of multiplication operations involving values having a first precision using a recursive multiplication process in which a second multiplier of the multiplier performs a second plurality of multiplication operations involving values having a second precision that are derived from the values having the first precision.

CLAUSE 2.

The multiplier circuitry of clause 1, wherein the second precision is one-half, one-quarter, one-eighth, or one-sixteenth of the first precision.

CLAUSE 3.

The multiplier circuitry of clause 1 or clause 2, wherein the values of the first precision are polynomials.

CLAUSE 4.

The multiplier circuitry of any of clauses 1-3, wherein the multiplier, second multiplier, or both implement a Karatsuba-Ofman decomposition for performing multiplication.

CLAUSE 5.

The multiplier circuitry of any of clauses 1-4, wherein the second multiplier comprises a third multiplier configurable to perform a third plurality of multiplication operations involving values have a third precision that are derived from the values having the second precision.

CLAUSE 6.

The multiplier circuitry of clause 5, wherein the third multiplier comprises a fourth multiplier configurable to perform a fourth plurality of multiplication operations involving values have a fourth precision that are derived from the values having the third precision.

CLAUSE 7.

The multiplier circuitry of clause 6, wherein the fourth multiplier comprises a fifth multiplier configurable to perform a fifth plurality of multiplication operations involving values have a fifth precision that are derived from the values having the fourth precision.

CLAUSE 8.

The multiplier circuitry of clause 7, wherein the fifth multiplier comprises a sixth multiplier configurable to perform a sixth plurality of multiplication operations involving values have a sixth precision that are derived from the values having the fifth precision.

CLAUSE 9.

The multiplier circuitry of clause 8, wherein the sixth multiplier comprises a seventh multiplier configurable to perform a seventh plurality of multiplication operations involving values have a seventh precision that are derived from the values having the sixth precision.

CLAUSE 10.

The multiplier circuitry of any of clauses 1-9, wherein the first precision corresponds to 1024 or 2048 bits or 1024 coefficients or 2048 coefficients.

CLAUSE 11.

The multiplier circuitry of clauses 1-9, wherein the first precision corresponds to 256 or 512 bits or 256 coefficients or 512 coefficients.

CLAUSE 12.

The multiplier circuitry of clauses 1-9, wherein the first precision corresponds to 128 bits or 128 coefficients.

CLAUSE 13.

The multiplier circuitry of clauses 1-9, wherein the first precision corresponds to 64 bits or 64 coefficients.

CLAUSE 14.

The multiplier circuitry of clauses 1-9, wherein the first precision corresponds to 2, 4, 8, 16, or 32 bits or 2, 4, 8, 16, or 32 coefficients.

CLAUSE 15.

The multiplier circuitry of any of clauses 10-14, wherein the values having the first precision are polynomials.

CLAUSE 16.

The multiplier circuitry of any of clauses 1-16, wherein the values having the first precision are derived from values having a seventh precision.

CLAUSE 17.

The multiplier circuitry of clause 16, comprising:

a first buffer configurable to store a first portion of the values having the first precision.
a second buffer configurable to store a second portion of the values having the first precision.

CLAUSE 18.

The multiplier circuitry of any of clauses 1-17, wherein the multiplier is configurable to generate:

a first subproduct of the plurality of subproducts by multiplying a first portion of a first value of the values having the first precision and a first portion of a second value of the values having the first precision; and
a second subproduct of the plurality of subproducts by multiplying a second portion of the first value of the values having the first precision and a second portion of the second value of the values having the first precision.

CLAUSE 19.

The multiplier circuitry of clause 18, comprising addition/subtraction circuitry configurable to receive the first subproduct and a third value and generate a partial product by combining the first subproduct and the third value.

CLAUSE 20.

The multiplier circuitry of clause 19, wherein combining the first subproduct and the third value comprises adding the first subproduct and the third value.

CLAUSE 21.

The multiplier circuitry of clause 19, wherein combining the first subproduct and the third value comprises subtracting the first subproduct from the third value.

CLAUSE 22.

The multiplier circuitry of any of clauses 19-21, wherein the third value is selectable from a fourth value and a fifth value.

CLAUSE 23.

The multiplier circuitry of clause 22, comprising a multiplexer configurable to receive the fourth value and the fifth value and output either the fourth value or the fifth value as the third value.

CLAUSE 24.

The multiplier circuitry of clause 22 or clause 23, wherein the fourth value is zero.

CLAUSE 25.

The multiplier circuitry of clause 23 or clause 24, wherein the multiplication circuitry comprises a storage unit communicatively coupled to the multiplexer, wherein the storage unit is configurable to store the fifth value and send the fifth value to the multiplexer.

CLAUSE 26.

The multiplier circuitry of any of clauses 22-25, comprising a control unit communicatively coupled to the multiplexer and configurable to send the multiplexer a control signal, wherein the multiplexer is configurable to select the fourth value or the fifth value as the third values based on the control signal.

CLAUSE 27.

The multiplier circuitry of any of clauses 22-26, wherein the fifth value is a value previously generated by the addition/subtraction circuitry.

CLAUSE 28.

The multiplier circuitry of clause 27, wherein the addition/subtraction circuitry comprises a first adder/subtractor configurable to receive the first subproduct and the third value and generate the partial product.

CLAUSE 29.

The multiplier circuitry of clause 28, wherein the addition subtraction circuitry comprise a second adder/subtractor configurable to generate the fifth value.

CLAUSE 30.

The multiplier circuitry of clause 19, wherein the addition/subtraction circuitry comprises:

a first adder/subtractor communicatively coupled to the multiplier and configurable to receive the first subproduct and the third value and generate the partial product; and
a second adder/subtractor communicatively coupled to the multiplier and the first adder/subtractor, wherein the second adder/subtractor is configurable to receive a fourth value from the multiplier and a fifth value and generate a second partial product by combining the fourth value and the fifth value.

CLAUSE 31.

The multiplier circuitry of clause 30, wherein combining the fourth value and the fifth value comprises adding the fourth value and the fifth value.

CLAUSE 32.

The multiplier circuitry of clause 30, wherein combining the fourth value and the fifth value comprises subtracting fourth value from the fifth value.

CLAUSE 33.

The multiplier circuitry of any of clauses 30-32, wherein the fourth value is a third subproduct of the plurality of subproducts generated by the multiplier.

CLAUSE 34.

The multiplier circuitry of any of clauses 30-32, wherein the fifth value is a third partial product generated by the first adder/subtractor or zero.

CLAUSE 35.

The multiplier circuitry of clause 34, comprising a multiplexer communicatively coupled to the multiplier and the second adder/subtractor, wherein the multiplier is configurable to select the zero or the third partial product to output as the fifth value to the second adder/subtractor.

CLAUSE 36.

The multiplier circuitry of clause 35, comprising a storage unit communicatively coupled to the second adder/subtractor, wherein the storage unit is configurable to receive the second partial product from the second adder/subtractor and store the second partial product.

CLAUSE 37.

The multiplier circuitry of clause 36, comprising a second multiplexer communicatively coupled to the multiplier and the first adder/subtractor, wherein the second multiplexer is configurable to receive the second partial product from the storage unit and a second zero and output the second partial product or the second zero as a sixth value to the first adder/subtractor.

CLAUSE 38.

The multiplier circuitry of clause 37, wherein the first adder/subtractor is configurable to:

receive a fourth subproduct generated by the multiplier;
receive the sixth value from the second multiplexer; and
generate a fourth partial product by combining the sixth value and the fourth subproduct.

CLAUSE 39.

The multiplier circuitry of clause 38, wherein the first adder/subtractor is configurable to combine the sixth value and the fourth subproduct by adding the sixth value and the fourth subproduct.

CLAUSE 40.

The multiplier circuitry of clause 38, wherein the first adder/subtractor is configurable to combine the sixth value and the fourth subproduct by subtracting the fourth subproduct from the sixth value.

CLAUSE 41.

The multiplier circuitry of any of clauses 38-40, wherein:

the multiplier is configurable to generate a fifth subproduct of the plurality of subproducts by multiplying a first portion of a third value of the values having the first precision and a first portion of a fourth value of the values having the first precision; and
the multiplexer is configurable to receive the fifth subproduct and a third zero and output the fifth subproduct of the third zero as a seventh value.

CLAUSE 42.

The multiplier circuitry of clause 41, wherein the second adder/subtractor circuitry is configurable to:

receive the fourth subproduct from the first adder/subtractor;
receive the seventh value from the multiplexer; and

combine the fourth subproduct and the seventh value to generate an eighth value.

CLAUSE 43.

The multiplier circuitry of clause 42, comprising a register communicatively coupled to the first adder/subtractor and configurable to receive and store a partial product output by the first adder/subtractor.

CLAUSE 44.

The multiplier circuitry of clause 43, comprising a third multiplexer configurable to receive the partial product and the eighth value and output the partial product or the eighth value.

CLAUSE 45.

The multiplier circuitry of any of clauses 37-44, comprising a control unit communicatively coupled to the first adder/subtractor, the second adder/subtractor, the multiplexer, the second multiplexer, and the storage unit.

CLAUSE 46.

The multiplier circuitry of clause 45, wherein the control circuitry is configurable to control operation of the first adder/subtractor, the second adder/subtractor, the multiplexer, the second multiplexer, and the storage unit.

CLAUSE 47.

The multiplier circuitry of any of clauses 1-46, wherein the multiplier circuitry is implemented at least partially using a virtual machine.

CLAUSE 48.

The multiplier circuitry of any of clauses 1-46, wherein the multiplier circuitry is implemented on an integrated circuit device.

CLAUSE 49.

The multiplier circuitry of clause 40, wherein the integrated circuit device comprises a programmable logic device.

CLAUSE 50.

The multiplier circuitry of clause 4-, wherein the multiplier circuitry is implemented in hard logic of the programmable logic device.

CLAUSE 51.

The multiplier circuitry of clause 50, wherein the multiplier circuitry is partially implemented in soft logic of the programmable logic device.

CLAUSE 52.

The multiplier circuitry of clause 51, wherein the second multiplier is implemented at least partially in the hard logic of the programmable logic device.

CLAUSE 53.

The multiplier circuitry of any of clauses 49-52, wherein the programmable logic device comprises a field-programmable gate array (FPGA).

CLAUSE 54.

The multiplier circuitry of any of clauses 48-53, wherein the integrated circuit device is included in a first system that includes the integrated circuit device and a second integrated circuit device.

CLAUSE 55.

The multiplier circuitry of clause 54, wherein the second integrated circuit device comprises a processor.

CLAUSE 56.

The multiplier circuitry of clause 54, wherein the first integrated circuit device and the second integrated circuit device are mounted on a substrate of the first system.

CLAUSE 57.

The multiplier circuitry of any of clauses 1-56, wherein the multiplier circuitry operates in accordance with a module schedule.

CLAUSE 58.

An integrated circuit comprising multiplier circuitry, the multiplier circuitry comprising:
a multiplier configured to generate a plurality of subproducts by performing a plurality of multiplication operations involving values having a first precision using a recursive multiplication process in which a second multiplier of the multiplier performs a second plurality of multiplication operations involving values having a second precision that are derived from the values having the first precision.

CLAUSE 59.

The integrated circuit of clause 58, comprising a register configurable to store the values having the precision and the plurality of subproducts.

CLAUSE 60.

The integrated circuit device of clause 59, wherein each of the plurality of subproducts is associated with a corresponding offset of a plurality of offsets, wherein each offset of the plurality of offsets corresponds to a relative significance of a subproduct of the plurality of subproducts.

CLAUSE 61.

The integrated circuit device of clause 60, comprising adder circuitry configurable to add the plurality of sub-products while accounting for the plurality of offsets.

CLAUSE 62.

The integrated circuit device of clause 61, wherein the multiplier circuitry is configurable to perform the plurality of multiplication operations by performing one or more stages of polynomial expansion in accordance with a predetermined control schedule or a counter based control schedule.

CLAUSE 63.

The integrated circuit device of claim 58, wherein the integrated circuit device comprises a programmable logic device.

CLAUSE 64.

A system comprising:

a first integrated circuit device comprising multiplier circuitry, the multiplier circuitry comprising a multiplier configured to generate a plurality of subproducts by performing a plurality of multiplication operations involving values having a first precision using a recursive multiplication process in which a second multiplier of the multiplier performs a second plurality of multiplication operations involving values having a second precision that are derived from the values having the first precision; and

a second integrated circuit device communicatively coupled to the first integrated circuit device.

CLAUSE 65.

The system of clause 64, wherein the second integrated circuit device comprises a processor.

CLAUSE 66.

The system of clause 65, the first integrated circuit device comprises a programmable logic device.

CLAUSE 67.

The system of clause 64, comprising a substrate, wherein the first integrated circuit device and the second integrated circuit device are mounted on the substrate.

Following the discussion related to FIG. 8, it should be noted that similar techniques can be applied for higher degree polynomials. An example of a higher degree polynomial multiplication is illustrated below in Appendix FIG. 1. In this particular example, the dependencies between arithmetic operations for a seventh degree polynomial multiplication operation when the K-O algorithm is applied are shown, and the image below illustrates a graph showing such dependencies. There are sixteen total sub-inputs that undergo operations to achieve thirteen outputs. The graph merely illustrates the flow of data and the dependencies of each operation in the graph. It should be noted that the dependencies of the addition operations 144, multiplication operations 145, and the subtraction operations 146 may be different depending on the degree of polynomial undergoing polynomial multiplication.

As discussed above, with respect to FIG 21., by manipulating the radix of the polynomial multiplier 266, the amount of wiring may be reduced, but it may also reduce the performance of the solution (e.g., relative to the folded polynomial multiplier 260). One attempt to remedy this is to improve the physical placement by flattening the folded core. Appendix FIG. 2 illustrates a flow graph with a flattened structure of the folded polynomial multiplier. The flow graph may include some connections which have very long wire spans with wide data buses (e.g., 4096 bytes), which may create a difficult timing closure problem. That is, timing may be difficult to sync up between wire connections. To remedy this, a sink core may be added to add latency. This latency may be used to automatically re-time the wire connection leading to the sink core. By breaking up the long route, timing closure may be improved in two ways. First, by allowing a register to be inserted anywhere in the path leading up to it, a single register (bus width) may cut the distance in half. Secondly, this may add another degree in freedom to the route, giving the place and route tool more ways to get between the two points. A sink functional unit operates as before, with the same pipeline depth, where the additional latency is used to re-time the path and not the functional unit.

**Claims**

1. Multiplier circuitry comprising:
   a multiplier configurable to generate a plurality of subproducts by performing a plurality of multiplication operations involving values having a first precision using a recursive multiplication process in which a second multiplier of the multiplier performs a second plurality of multiplication operations involving values having a second precision that are derived from the values having the first precision.

2. The multiplier circuitry of claim 1,
   wherein the second precision is one-half, one-quarter, one-eighth, or one-sixteenth of the first precision.

3. The multiplier circuitry of any one of claims 1 or 2,
   wherein the values having the first precision are polynomials.

4. The multiplier circuitry of any one of claims 1 to 3,
   wherein the multiplier, second multiplier, or both implement a Karatsuba-Ofman algorithm for performing multiplication.

**5.** The multiplier circuitry of any one of claims 1 to 4,
wherein the second multiplier comprises a third multiplier configurable to perform a third plurality of multiplication operations involving values have a third precision that are derived from the values having the second precision.

**6.** The multiplier circuitry of any one of claims 1 to 5,
wherein the multiplier circuitry is configurable to operate in accordance with a modulo schedule.

**7.** The multiplier circuitry of any one of claims 1 to 6,
wherein the second multiplier comprises a third multiplier configurable to perform a third plurality of multiplication operations involving values have a third precision that are derived from the values having the second precision.

**8.** The multiplier circuitry of any one of claims 1 to 7,
wherein the first precision corresponds to 32 bits, 64, bits, or 128 bits.

**9.** The multiplier circuitry of any one of claims 1 to 8,
wherein the multiplier is configurable to generate:

> a first subproduct of the plurality of subproducts by multiplying a first portion of a first value of the values having the first precision and a first portion of a second value of the values having the first precision; and
> a second subproduct of the plurality of subproducts by multiplying a second portion of the first value of the values having the first precision and a second portion of the second value of the values having the first precision.

**10.** The multiplier circuitry of claim 9,
further comprising addition/subtraction circuitry configurable to receive the first subproduct and a third value and generate a partial product by combining the first subproduct and the third value, wherein the addition/subtraction circuitry comprises:

> a first adder/subtractor communicatively coupled to the multiplier and configurable to:

> > receive the first subproduct and the third value; and
> > generate the partial product; and

> a second adder/subtractor communicatively coupled to the multiplier and the first adder/subtractor, wherein the second adder/subtractor is configurable to:

> > receive a fourth value from the multiplier and a fifth value; and
> > generate a second partial product by combining the fourth value and the fifth value.

**11.** A system comprising:

> a first integrated circuit device comprising multiplier circuitry of any one of claims 1 to 10; and
> a second integrated circuit device communicatively coupled to the first integrated circuit device.

**12.** The system of claim 11,
wherein the second integrated circuit device comprises a processor.

**13.** The system of claim 12,
the first integrated circuit device comprises a programmable logic device.

**14.** The system of any one of claims 11 to 13,
further comprising a substrate, wherein the first integrated circuit device and the second integrated circuit device are mounted on the substrate.

FIG. 1

FIG. 2

60
PLAINTEXT

62
ENCRYPTED

68 — v1 ⟶ m1 — 64

70
v2 ⟶ m2 — 66

72B — + + — 72A

v3 — 76

m3 — 74

=

FIG. 3

FIG. 4

EP 4 202 640 A1

| | $S_4$ | $S_3$ | $S_2$ | $S_1$ | $S_0$ | | ALMs |
|---|---|---|---|---|---|---|---|
| Sub products for $m_0$ | $x_5 \cdot y_{31}$ $x_4 \cdot y_{30}$ $x_3 \cdot y_{29}$ $x_2 \cdot y_{28}$ $x_1 \cdot y_{27}$ $x_0 \cdot y_{26}$ | $x_4 \cdot y_{31}$ $x_3 \cdot y_{30}$ $x_2 \cdot y_{29}$ $x_1 \cdot y_{28}$ $x_0 \cdot y_{27}$ | $x_3 \cdot y_{31}$ $x_2 \cdot y_{30}$ $x_1 \cdot y_{29}$ $x_0 \cdot y_{28}$ | $x_2 \cdot y_{31}$ $x_1 \cdot y_{30}$ $x_0 \cdot y_{29}$ | $x_1 \cdot y_{31}$ $x_0 \cdot y_{30}$ | $x_0 \cdot y_{31}$ | |
| reduction $m_0$ | $s_4$ | $s_3$ | $s_2$ | $s_1$ | $s_0$ | $x_0 \cdot y_{31}$ | 2.5 |
| | $q_2$ | $q_1$ | $q_0$ | $x_0 \cdot y_{29}$ | | | 1.5 |
| | $r_0$ | $x_0 \cdot y_{27}$ | | | | | 0.5 |
| reduction $m_1$ | $ss_4$ | $ss_3$ | $ss_2$ | $ss_1$ | $ss_0$ | $y_0 \cdot x_{31}$ | 2.5 |
| | $qq_2$ | $qq_1$ | $qq_0$ | $y_0 \cdot x_{29}$ | | | 1.5 |
| | $rr_0$ | $y_0 \cdot x_{27}$ | | | | | 0.5 |
| sum of reductions | $sss_5$ | $sss_4$ | $sss_3$ | $sss_2$ | $sss_1$ | $sss_0$ | 3 |
| | $qqq_3$ | $qqq_2$ | $qqq_1$ | $qqq_0$ | | | 2 |
| | $rrr_1$ | $rrr_0$ | | | | | 1 |
| sum of reductions | $ssss_5$ | $ssss_4$ | $ssss_3$ | $ssss_2$ | $sss_1$ | $sss_0$ | 2 |
| | $rrr_1$ | $rrr_0$ | | | | | |
| final sum | $sssss_5$ | $sssss_4$ | $ssss_3$ | $ssss_2$ | $sss_1$ | $sss_0$ | 1 |
| total | | | | | | | 18 |

FIG. 5

FIG. 6

EP 4 202 640 A1

FIG. 7

FIG. 8

EP 4 202 640 A1

164B          164A

(c2) (c1) (c0)     (c2) (c1) (c0)

(c2) (c1) (c0)          ← 162

164C

## FIG. 9

172A          172B          172C          172D

| PAH d=63 | PAH d=63 |          | PAH d=63 | PAH d=63 |
(64)      (64)                    (64)      (64)

174A

| MULT 63x63->126 | ADD d=63 | ADD d=63 | MULT 63x63->126 | ─176B
(127)             (64)        (64)        (127)

176A                    174B

176C ─ | MULT 63x63->126 | ADD d=126 | ─177
(127)                    (127)

170

| SUB d=126 | ─175

(63)  (63)    (63)  (63)

174D ─ | ADD d=63 |     | ADD d=63 | ─174C
(64)    (63)    (1)  (63)            (64)

| 178A |   | 178B | 179 | 178C |   | 178D |

## FIG. 10

FIG. 11

FIG. 12

EP 4 202 640 A1

**FIG. 13A** 194

196

180

190

TO FIG. 13B

FIG. 13B

FIG. 13C

EP 4 202 640 A1

FIG. 14

```
                                    ⌒205
%********************** FU Allocation Report **********************
    ⌒Operation x_input :
         FU #0
   206       X0, X1,
    ⌞Operation y_input :
         FU #0
             Y0, Y1,
208⁓Operation add :
         FU #0
             add_1, add_3, add_5,
         FU #1
             add_0, add_2, add_4,
209⁓Operation sub :
         FU #0
             sub_1, sub_3,
         FU #1
             sub_0, sub_2,
212⁓Operation output :
         FU #0
             R_0, R_1,
210⁓Operation poly_mult :
         FU #0
             poly_mult_0, poly_mult_1, poly_mult_2,
```

FIG. 15

EP 4 202 640 A1

222 — Maximum scheduled time is 39
224 — Modulo is 3
226 — Schedule Length is 42
228 — Channels 240 is 14

— 220
— 230

```
              Schedule Time : 0  1  2  3  4  5  6  7  8  9 10 11 12 13 14 15 16 17 18 19 20 21 22 23 24 25 26 27 28 29 30 31 32 33 34 35 36 37 38 39 40 41
232A — x_input    0 : A  A  .  B  B  .  C  C  .  D  D  .  E  E  .  F  F  .  G  G  .  H  H  .  I  I  .  J  J  .  K  K  .  L  L  .  M  M  .  N  N  .
232B — y_input    0 : A  A  .  B  B  .  C  C  .  D  D  .  E  E  .  F  F  .  G  G  .  H  H  .  I  I  .  J  J  .  K  K  .  L  L  .  M  M  .  N  N  .
234  — poly_mult  0 : L  M  N  M  N  A  N  A  B  A  B  C  B  C  D  C  D  E  D  E  F  E  F  G  F  G  H  G  H  I  H  I  J  I  J  K  J  K  L  K  L  M
236A — add        0 : N  I  F  A  J  G  B  K  H  C  L  I  D  M  J  E  N  K  F  A  L  G  B  M  H  C  N  I  D  A  J  E  B  K  F  C  L  G  D  M  H  E
236B — add        1 : N  I  F  A  J  G  B  K  H  C  L  I  D  M  J  E  N  K  F  A  L  G  B  M  H  C  N  I  D  A  J  E  B  K  F  C  L  G  D  M  H  E
237A — sub        0 : D  .  H  E  .  I  F  .  J  G  .  K  H  .  L  I  .  M  J  .  N  K  .  A  L  .  B  M  .  C  N  .  D  A  .  E  B  .  F  C  .  G
237B — sub        1 : D  .  H  E  .  I  F  .  J  G  .  K  H  .  L  I  .  M  J  .  N  K  .  A  L  .  B  M  .  C  N  .  D  A  .  E  B  .  F  C  .  G
238  — output     0 : B  C  .  C  D  .  D  E  .  E  F  .  F  G  .  G  H  .  H  I  .  I  J  .  J  K  .  K  L  .  L  M  .  M  N  .  N  A  .  A  B  .
```

FIG. 16

210

```
========== OPERATION poly_mult ==========
     FU #0 : 0 1 2
     Port 0 :    READS FROM THIS STORAGE:
247      poly_mult_0:0 -> add_2:0@19[1], poly_mult_2:0 -> sub_0:0@23[2],
     poly_mult_1:0 -> add_2:1@19[1], poly_mult_1:0 -> add_5:0@29[2], poly_mult_0:0 -> sub_2:0@33[0],

     Port 1 :    READS FROM THIS STORAGE:
         poly_mult_0:1 -> add_3:0@19[1], poly_mult_2:1 -> sub_1:0@23[2],
     poly_mult_1:1 -> add_3:1@19[1], poly_mult_0:1 -> add_4:0@29[2], poly_mult_1:1 -> sub_3:1@33[0],
```

208

```
========== OPERATION add ==========
     FU #0 : 0 1 2
     Port 0 :    READS FROM THIS STORAGE:
248   add_1:0 -> poly_mult_2:1@9[0],
     add_3:0 -> sub_1:1@23[2], add_5:0 -> sub_2:1@33[0],

     FU #1 : 0 1 2
     Port 0 :    READS FROM THIS STORAGE:
         add_0:0 -> poly_mult_2:0@9[0],
     add_2:0 -> sub_0:1@23[2], add_4:0 -> sub_3:0@33[0],
```

209

```
========== OPERATION sub ==========
     FU #0 : 0 2
     Port 0 :    READS FROM THIS STORAGE:
249   sub_1:0 -> add_5:1@29[2], sub_3:0 -> R_1:0@37[1],

     FU #1 : 0 2
     Port 0 :    READS FROM THIS STORAGE:
249   sub_0:0 -> add_4:1@29[2], sub_2:0 -> R_0:0@39[0],
```

246

# FIG. 17

```
FU : poly_mult_0
      Current Storage : 1, initial number of reads 2
252       Read slot : poly_mult_0:0 -> add_2:0 @ 19 (1)      250
          Read slot : poly_mult_2:0 -> sub_0:0 @ 23 (2)
      Current Storage : 0, initial number of reads 3
          Read slot : poly_mult_1:0 -> add_2:1 @ 19 (1)
254       Read slot : poly_mult_1:0 -> add_5:0 @ 29 (2)
          Read slot : poly_mult_0:0 -> sub_2:0 @ 33 (0)
      Current Storage : 1, initial number of reads 2
          Read slot : poly_mult_0:1 -> add_3:0 @ 19 (1)
          Read slot : poly_mult_2:1 -> sub_1:0 @ 23 (2)
      Current Storage : 0, initial number of reads 3
          Read slot : poly_mult_1:1 -> add_3:1 @ 19 (1)
          Read slot : poly_mult_0:1 -> add_4:0 @ 29 (2)
          Read slot : poly_mult_1:1 -> sub_3:1 @ 33 (0)
FU : add_0
      Current Storage : 1, initial number of reads 1
          Read slot : add_1:0 -> poly_mult_2:1 @ 9 (0)
      Current Storage : 0, initial number of reads 2
          Read slot : add_3:0 -> sub_1:1 @ 23 (2)
          Read slot : add_5:0 -> sub_2:1 @ 33 (0)
FU : add_1
      Current Storage : 1, initial number of reads 1
          Read slot : add_0:0 -> poly_mult_2:0 @ 9 (0)
      Current Storage : 0, initial number of reads 2
          Read slot : add_2:0 -> sub_0:1 @ 23 (2)
          Read slot : add_4:0 -> sub_3:0 @ 33 (0)
FU : sub_0
      Current Storage : 0, initial number of reads 2
          Read slot : sub_1:0 -> add_5:1 @ 29 (2)
          Read slot : sub_3:0 -> R_1:0 @ 37 (1)
FU : sub_1
      Current Storage : 0, initial number of reads 2
          Read slot : sub_0:0 -> add_4:1 @ 29 (2)
          Read slot : sub_2:0 -> R_0:0 @ 39 (0)      FIG. 18
```

```
FU poly_mult_0 :                                           257
256 — InMux 0 :
        storage_0_FU_x_input_0_Port_0
        storage_1_FU_add_1_Port_0
    InMux 1 :                                              255
        storage_0_FU_y_input_0_Port_0
        storage_1_FU_add_0_Port_0
FU add_0 :
    InMux 0 :
        storage_1_FU_y_input_0_Port_0
        storage_0_FU_poly_mult_0_Port_0
        storage_1_FU_poly_mult_0_Port_1
    InMux 1 :
        storage_0_FU_y_input_0_Port_0
        storage_0_FU_poly_mult_0_Port_1
        storage_0_FU_sub_0_Port_0
FU add_1 :
    InMux 0 :
        storage_1_FU_x_input_0_Port_0
        storage_1_FU_poly_mult_0_Port_0
        storage_0_FU_poly_mult_0_Port_1
    InMux 1 :
        storage_0_FU_x_input_0_Port_0
        storage_0_FU_poly_mult_0_Port_0
        storage_0_FU_sub_1_Port_0
FU sub_0 :
    InMux 0 :
        storage_1_FU_poly_mult_0_Port_1
        storage_0_FU_add_1_Port_0
    InMux 1 :
        storage_0_FU_poly_mult_0_Port_1
        storage_0_FU_add_0_Port_0
FU sub_1 :
    InMux 0 :
        storage_1_FU_poly_mult_0_Port_0
        storage_0_FU_poly_mult_0_Port_0
    InMux 1 :
        storage_0_FU_add_0_Port_0
        storage_0_FU_add_1_Port_0
```

FIG. 19

FIG. 20

258

FIG. 21

FIG. 22

FIG. 23

FIG. 24

| | 322 | 324D | 324C | 324B | 324A |
|---|---|---|---|---|---|
| 0 | (00H, 00L) | - | - | 00H | 00L |
| 1 | (01H, 01L) | - | 01H | 00H+01L | - |
| 2 | (02H, 02L) | 02H | 01H+02L | | |
| 3 | (03H, 03L) | 02H+03L | | | 00L-03H |
| 4 | (22H, 22L) | | | 00H+01L-22H | 00L-03H-22L |
| 5 | (23H, 23L) | | 01H+02L-23H | 00H+01L-22H-23L | |
| 6 | (20H, 20L) | 02H+03L+20H | 01H+02L-23H+20L | | |
| 7 | (21H, 21L) | 02H+03L+20H+21L | | | 00L-03H-22L-21H |
| 8 | (31H, 31L) | | | 00H+01L-22H-23L-31H | 00L-03H-22L-21H-31L |
| 9 | (32H, 32L) | | 01H+02L-23H+20L-32H | 00H+01L-22H-23L-31H-32L | |
| 10 | (33H, 33L) | 02H+03L+20H+21L-33H | 01H+02L-23H+20L-32H-33L | | |
| 11 | (30H, 30L) | 02H+03L+20H+21L-33H+30L | | | 00L-03H-22L-21H-31L-30H |
| 12 | (13H, 13L) | | | 00H+01L-22H-23L-31H-32L-13H | 00L-03H-22L-21H-31L-30H-13L |
| 13 | (10H, 10L) | | 01H+02L-23H+20L-32H-33L+10H | 00H+01L-22H-23L-31H-32L-13H+10L | |
| 14 | (11H, 11L) | 02H+03L+20H+21L-33H+30L+11H | 01H+02L-23H+20L-32H-33L+10H+11L | | |
| 15 | (12H, 12L) | 02H+03L+20H+21L-33H+30L+11H+12L | | | 00L-03H-22L-21H-31L-30H-13L-12H |

320

FIG. 25

FIG. 26

FIG. 27A

FIG. 27B

FIG. 28

Read  0,8,1,9,2,10,3,11,4,12,5,13,6,14,7,15 — 402
Write 16,17,18,19,20,21,23,23

Read 0,4,1,5,2,6,3,7|8,12,9,13,10,14,11,15 — 404
Write 24,25,26,27|28,29,30,31                    400
Read 16,20,17,21,18,22,19,23
Write 32,33,34,35

Read  0,2,1,3|4,6,5,7|8,10,9,11|12,14,13,15
Write 36,37|38,39|40,41|42,43
Read  16,18,17,19|20,22,21,23 — 406
Write  44,45|46,47
Read 24,26,25,27|28,30,29,31
Write 48,49|50,51
Read 32,34,33,35
Write 52,53

# FIG. 29

FIG. 30

450

452

Read 0,4,1,5,2,6,3,7
Write 8,9,10,11

454

Read 0,2,1,3|4,6,5,7
Write 12,13|14,15
Read 8,10,9,11
Write 16,17

Read 0,1|2,3|4,5|6,7
Write 18|19|20|21
Read 8,9|10,11
Write 22|23 — 456
Read 12,13|14,15
Write 24|25
Read 16,17
Write 26

# FIG. 31

EP 4 202 640 A1

**FIG. 32**

| 15 | 14 | 13 | 12 | 11 | 10 | 9 | 8 | 7 | 6 | 5 | 4 | 3 | 2 | 1 | 0 |

| 3 | 42 | | | | 41 | 40 | | | 39 | 38 | | | 37 | 36 |

474

| 23 | 22 | 21 | 20 | 19 | 18 | 17 | 16 |

| 47 | 46 | | | 45 | 44 |

| 31 | 30 | 29 | 28 | | | 27 | 26 | 25 | 24 |

| 51 | 50 | | | 49 | 48 |

| 35 | 34 | 33 | 32 |

| 53 | 52 |

472

**FIG. 33**

492B — 1 | 0 — 492A  A

494B — 1 | 0  B
494A

498 — 1, 1 | 0, 0 — 496

1, 0 — 500A

0, 1 — 500B

AB01 | AB01 | AB01 — 502

EP 4 202 640 A1

FIG. 34

FIG. 35

EP 4 202 640 A1

572    570    574

576A

| =0 | 56–63(14) | 56–63(13) | 56–63(12) | 56–63(11) | 56–63(10) | 56–63(9) | 56–63(8) | 15 |

• • •

| =0 | 16–23(14) | 16–23(13) | 16–23(12) | 16–23(11) | 16–23(10) | 16–23(9) | 16–23(8) | 5 |
| =0 | 8–15(14) | 8–15(13) | 8–15(12) | 8–15(11) | 8–15(10) | 8–15(9) | 8–15(8) | 3 |
| =0 | 0–7(14) | 0–7(13) | 0–7(12) | 0–7(11) | 0–7(10) | 0–7(9) | 0–7(8) | 1 |

576B

| 56–63(7) | 56–63(6) | 56–63(5) | 56–63(4) | 56–63(3) | 56–63(2) | 56–63(1) | 56–63(0) | 15 |

• • •

| 16–23(7) | 16–23(6) | 16–23(5) | 16–23(4) | 16–23(3) | 16–23(2) | 16–23(1) | 16–23(0) | 4 |
| 8–15(7) | 8–15(6) | 8–15(5) | 8–15(4) | 8–15(3) | 8–15(2) | 8–15(1) | 8–15(0) | 2 |
| 0–7(7) | 0–7(6) | 0–7(5) | 0–7(4) | 0–7(3) | 0–7(2) | 0–7(1) | 0–7(0) | 0 |

FIG. 36

FIG. 37

FIG. 38

EP 4 202 640 A1

FIG. 39

FIG. 40

FIG. 41

720

726A 722 MEMORY A 730A 728A
726B 724 MEMORY B 730B 728B 732
734A MEMORY 728C
734B MEMORY 728D

740

DATA PROCESSING SYSTEM

742 — HOST PROCESSOR

744 — MEMORY / STORAGE

746 — NETWORK INTERFACE

12 — INTEGRATED CIRCUIT DEVICE

FIG. 42

Europäisches
Patentamt

European
Patent Office

Office européen
des brevets

# EUROPEAN SEARCH REPORT

**Application Number**

EP 22 20 6380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZUR GATHEN JOACHIM VON ET AL: "Efficient FPGA-Based Karatsuba Multipliers for Polynomials over${\mathbb F}_{2}$", 11 August 2005 (2005-08-11), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 359 - 369, XP047448074, ISBN: 978-3-540-74549-5 * figure 1 * * Sections 1-4 * | 1-14 | INV. G06F7/53 G06F7/72 H04L9/00 |
| X | LEE CHIOU-YNG ET AL: "Subquadratic Space-Complexity Digit-Serial Multipliers Over $GF(2^{m})$ Using Generalized $(a,b)$-Way Karatsuba Algorithm", IEEE TRANSACTIONS ON CIRCUITS AND SYSTEMS I: REGULAR PAPERS, IEEE, US, vol. 62, no. 4, 1 April 2015 (2015-04-01), pages 1091-1098, XP011577078, ISSN: 1549-8328, DOI: 10.1109/TCSI.2015.2388842 [retrieved on 2015-03-27] * figures 1, 2 * * Sections II-IV * | 1-14 | |
| X | MIGLIORE VINCENT VINCENT MIGLIORE@UNIV-UBS FR ET AL: "A High-Speed Accelerator for Homomorphic Encryption using the Karatsuba Algorithm", ACM TRANSACTIONS ON EMBEDDED COMPUTING SYSTEMS, ACM, NEW YORK, NY, US, vol. 16, no. 5s, 27 September 2017 (2017-09-27), pages 1-17, XP058677158, ISSN: 1539-9087, DOI: 10.1145/3126558 * Sections 2.4, 3; figures 2, 5 * | 1-14 | TECHNICAL FIELDS SEARCHED (IPC)<br><br>G06F<br>H04L |

The present search report has been drawn up for all claims

| Place of search | Date of completion of the search | Examiner |
|---|---|---|
| Munich | 9 May 2023 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)